# EUROPÄISCHE PATENTSCHRIFT

(11) **EP 3 970 454 B1**
(45) Veröffentlichungstag und Bekanntmachung des Hinweises auf die Patenterteilung: **31.07.2024**
(21) Anmeldenummer: 20726818.6
(22) Anmeldetag: 18.05.2020
(51) Int. Cl.: H05B 47/105

(54) **ERFASSUNG DER RÄUMLICHEN ANORDNUNG VON KOMPONENTEN EINES BELEUCHTUNGSSYSTEMS UND ZUORDNUNG EINER JEWEILIGEN BETRIEBSADRESSE**
DETECTING THE SPATIAL ARRANGEMENT OF COMPONENTS OF A LIGHTING SYSTEM AND ASSIGNING A RESPECTIVE OPERATING ADDRESS
DÉTECTION DE L'AGENCEMENT SPATIAL DE COMPOSANTS D'UN SYSTÈME D'ÉCLAIRAGE ET ASSOCIATION D'UNE ADRESSE DE FONCTIONNEMENT RESPECTIVE

(30) Priorität: 17.05.2019 DE 102019113121
(43) Veröffentlichungstag der Anmeldung: 23.03.2022
(73) Patentinhaber: Trilux GmbH & Co. KG, 59759 Arnsberg (DE)
(72) Erfinder: WALDKIRCH, Philipp, 44143 Dortmund (DE)
(74) Vertreter: Lippert Stachow Patentanwälte Rechtsanwälte
(86) Internationale Anmeldenummer: PCT/EP2020/063873
(87) Internationale Veröffentlichungsnummer: WO 2020/234257

(56) Entgegenhaltungen:
- EP-A2- 2 315 503
- WO-A1-2016/023733
- WO-A1-2017/025854
- WO-A2-2017/024268
- US-A1- 2014 265 863

## Beschreibung

Die Erfindung betrifft ein Verfahren zur Positionsbestimmung für eine Mehrzahl von, an einer Steuereinrichtung, im Nachfolgenden auch Steuerungseinrichtung genannt, angeschlossenen, zur optischen Signalisierung ausgebildeten Komponente wie Leuchten, Lichtquellen und/oder Sensoren eines Beleuchtungssystems und zur Zuordnung einer jeweiligen positionsbezogenen Betriebsadresse zu den Komponenten sowie ein System zur Durchführung eines derartigen Verfahrens. Beleuchtungssysteme dienen allgemein zur Beleuchtung innerhalb einer Beleuchtungsumgebung und können je nach Größe der Beleuchtungsumgebung, beispielsweise in Großraumbüros oder Industriehallen, eine Vielzahl von Komponenten wie Leuchten, Lichtquellen, Schaltern und Sensoren, insbesondere Lichtsensoren und Präsenzsensoren, aufweisen, die je nach Ausführungsform an die Steuereinrichtung des Beleuchtungssystems angeschlossen sein können. Die Angabe "Beleuchtungsumgebung" meint im Folgenden allgemein insbesondere den Raumbereich, in welchem mittels des Beleuchtungssystems eine vorgegebene Beleuchtungsaufgabe erfüllt ist. Eine solche Beleuchtungsumgebung kann beispielsweise der Raum nebst Begrenzungsflächen einer Industriehalle oder eines Büros sein, jedoch je nach Ausführungsform auch mehrere oder gar eine große Anzahl von Räumen umfassen.

Bei einem komplexen Beleuchtungssystem mit einer prinzipiell beliebigen Anzahl von Beleuchtungskomponenten, die an die Steuereinrichtung angeschlossen sind, besteht häufig das Problem, dass nach der Installation der Komponenten, beispielsweise Leuchten und Sensoren, die exakte Raumposition der jeweiligen Komponente nicht bekannt ist. Diese Information kann jedoch für die Konfiguration des Beleuchtungssystems notwendig sein, beispielsweise um einen bestimmten Teilbereich der Beleuchtungsumgebung des Beleuchtungssystems zu beleuchten oder mehrere Leuchten einer Leuchtengruppe zuzuordnen, um beispielsweise einen vorgegebenen Teilraumbereich der Beleuchtungsumgebung zu beleuchten.

Die beschriebene Problematik tritt insbesondere bei solchen Systemen auf, bei welchen die Steuerungsadresse der jeweiligen Komponente zufällig vergeben wird, sodass daraus keine exakte Raumposition der jeweiligen Komponente bestimmt werden kann. Daraus resultiert häufig eine zeitaufwendige und fehleranfällige Suche bei dem Versuch, jede an die Steuereinrichtung angeschlossene Beleuchtungskomponente innerhalb der Beleuchtungsumgebung zu lokalisieren. Die beschriebene Problematik tritt beispielsweise bei einem Beleuchtungssystem auf, bei welchem die Beleuchtungskomponenten an die Steuereinrichtung mittels eines digitalen Protokolls, insbesondere das DALI (Digital Addressable Lighting Interface) - Protokoll nach IEC 62386 angeschlossen sind. Dieses Protokoll kann als "Inselsystem" mit maximal 64 Busteilnehmern oder als Subsystem über DALI-Gateways betrieben werden, sodass im letzteren Fall dieses Protokoll zur Steuerung einer beliebigen Anzahl von Beleuchtungskomponenten eingesetzt werden kann. Gerade bei derartigen Beleuchtungssystemen besteht das beschriebene Problem.

Die EP 2 315 503 A2 betrifft ein Verfahren zur Positionsbestimmung für eine Mehrzahl von an eine Steuerungseinrichtung angeschlossenen, zur optischen Signalisierung ausgebildeten Komponenten eines Beleuchtungssystems in einer Beleuchtungsumgebung und Zuordnung einer jeweiligen positionsbezogenen Betriebsadresse zu den Signalisierungskomponenten, umfassend die Schritte für jede der Signalisierungskomponenten:
a) Ansteuern der jeweiligen Signalisierungskomponente über eine jeweils zugeordnete Inbetriebnahmeadresse zur Abgabe einer optischen Signalisierung;
b) Erfassen der Signalisierung der jeweiligen Signalisierungskomponente mittels einer Bilderfassungseinrichtung zur Erstellung von Abbildungen der Beleuchtungsumgebung;
c) Ermitteln der Position der signalisierenden Komponente durch eine Bildverarbeitung auf der Basis der jeweiligen Abbildung, und
d) Festlegen und Zuordnen einer positionsbezogenen Betriebsadresse zu der jeweiligen signalisierenden Komponente durch die Steuereinrichtung oder ein die Steuereinrichtung ansteuerndes Datenendgerät.

Die US 2014 0265 863 A1 betrifft ein Beleuchtungssystem mit zumindest einer Beleuchtungslast wie eine Leuchte, ein diesem zugeordnetes elektrisches Vorschaltgerät zum Steuern der elektrischen Leistung für die Beleuchtungslast sowie eine Steuereinrichtung, die Anweisungen an das Vorschaltgerät zum Steuern der für die Beleuchtungslast bereitgestellten elektrischen Leistung übermittelt, wobei jedem Vorschaltgerät eine Verbindungsadresse zufällig zugewiesen wird. Um die einem Vorschaltgerät zugewiesene Verbindungsadresse zu identifizieren, wird die dem Vorschaltgerät zugeordnete Beleuchtungslast auf eine solche Weise angesteuert, dass die Beleuchtungslast die dem Vorschaltgerät zugewiesene Verbindungsadresse optisch anzeigt, wobei diese optische Anzeige in der Art einer optischen Signalisierung der kodierten Verbindungsadresse durchgeführt werden kann. Die Erfassung der an der jeweiligen Beleuchtungslast signalisierten Verbindungsadresse kann entweder visuell durch einen Benutzer oder mittels eines mobilen Endgerätes erfasst werden.

Die WO 2016 023 73 A1 betrifft ein Inbetriebnahmesystem für ein Beleuchtungssystem, wobei das Beleuchtungssystem eine Vielzahl von Steuerungen umfasst und jede Steuerung geeignet ist, einen Satz von Beleuchtungselementen zu steuern, die räumlich als Gruppe gruppiert sind und unter Verwendung eines Steuerungssatzes angesteuert werden. Zur Inbetriebnahme des Systems wird ein Steuerausgangssignal für den Satz von Beleuchtungselementen erzeugt, um ein Lichtausgabemuster anzuzeigen, wobei für ein Beleuchtungselement innerhalb des Satzes ein weiteres Steuerausgangssignal erzeugt wird, um das Lichtausgabemuster an dem Lichtelement zu ändern zur visuellen Identifizierung einer Position des Beleuchtungselements innerhalb des Satzes von Beleuchtungselementen. Dabei kann ein Kamerabild des visuell identifizierten Beleuchtungselements Verwendung finden, um die Position Beleuchtungselements innerhalb des Beleuchtungselementsatzes zu bestimmen und auf dieser Grundlage dem visuell identifizierten Lichtelement innerhalb des Satzes eine logische Adresse zuzuordnen.

Der vorliegenden Erfindung liegt die Aufgabe zu Grunde, die Positionsbestimmung einer Mehrzahl von an eine Steuereinrichtung angeschlossenen Beleuchtungskomponenten und eine Zuordnung einer jeweiligen positionsbezogenen Betriebsadresse zu den an die Steuereinrichtung angeschlossenen Beleuchtungskomponenten zu erleichtern.

Die vorliegende Erfindung löst die Aufgabe verfahrensseitig mit einem Verfahren zur Positionsbestimmung einer Mehrzahl von an eine Steuereinrichtung angeschlossenen, zur optischen Signalisierung ausgebildeten Komponenten eines Beleuchtungssystems in einer Beleuchtungsumgebung und Zuordnung einer jeweiligen positionsbezogenen Betriebsadresse zu den Signalisierungskomponenten mit den Merkmalen von Anspruch 1.

Mit dem erfindungsgemäßen Verfahren ist es nun ohne besonderen Aufwand möglich, auch bei einer sehr großen Anzahl von an die Steuereinrichtung angeschlossenen Beleuchtungskomponenten diese innerhalb der Beleuchtungsumgebung zu lokalisieren und einer jeweiligen positionsbezogenen Betriebsadresse zuzuordnen, sodass diese als Betriebsadresse für den Betrieb des Beleuchtungssystems herangezogen werden kann.

Je nach Ausführungsform des erfindungsgemäßen Verfahrens kann dieses im Wesentlichen rechnergestützt ablaufen, wobei ein Nutzer bei solchen Ausführungsformen allein die jeweilige Erstellung von Abbildungen der Beleuchtungsumgebung zur Erfassung der Signalisierung der jeweiligen Signalisierungskomponente veranlassen muss, auf deren Basis dann durch Bildverarbeitung der jeweiligen Abbildung und der zugeordneten Metadaten die jeweilige Position der signalisierenden Komponente ermittelt werden kann.

In einer besonders zweckmäßigen Ausführungsform kann jedoch auch vorgesehen sein, die Bildungserfassungseinrichtung rechnergestützt zu steuern, beispielsweise dadurch, dass die Bildungserfassungseinrichtung, wie z.B. eine Kamera zur Erfassung der Signalisierung der jeweiligen Signalisierungskomponente mittels eines Steuerungsprogramms gesteuert wird, wobei die beispielhaft angegebene Kamera für alle Bilderfassungen ortsfest gehalten werden kann. Dabei kann beispielsweise auch vorgesehen sein, dass die Kamera zur Erfassung der Signalisierung der jeweiligen Signalisierungskomponente geschwenkt wird und/oder Abbildungseinstellungen bzw. Objektiveinstellungen wie Objektivbrennweite und/oder Blende etc. eingestellt werden, wobei diese Werte wiederum als Metadaten der jeweiligen Abbildung mit abgespeichert und verarbeitet werden können.

Die Angabe "positionsbezogene Betriebsadresse" meint allgemein eine Betriebsadresse, die der jeweiligen Signalisierungskomponente nach der Erfassung ihrer Position innerhalb der Beleuchtungsumgebung zugeordnet ist. Dabei kann auch vorgesehen sein, dass in der Adresse selbst Information über die Position der jeweiligen Signalisierungskomponente abgelegt ist. Die Angabe "Erfassung einer Abbildung der Beleuchtungsumgebung" meint allgemein eine Bildaufnahme von oder in der Beleuchtungsumgebung, d.h. bezeichnet die Erzeugung einer bildlichen Aufnahme der gesamten Beleuchtungsumgebung oder die Erzeugung einer bildlichen Aufnahme eines Abschnittes der Beleuchtungsumgebung.

Weitere erfindungsgemäße Merkmale und Weiterbildung der Erfindung sind in der allgemeinen Beschreibung, den Figuren, der Figurenbeschreibung sowie den Unteransprüchen angegeben.

Wie obenstehend dargestellt, erfolgt erfindungsgemäß auf der Grundlage der jeweiligen im Rahmen einer Abbildung erfassten Signalisierung der jeweiligen Komponente des Beleuchtungssystems einschließlich der zur Abbildung miterfassten und zugeordneten Metadaten, die zumindest Positionsdaten aufweisen, eine Ermittlung der Position der signalisierenden Komponente durch eine Bildverarbeitung.

Um die Lokalisierung innerhalb der Beleuchtungsumgebung bereitzustellen, wird in einem zeitlichen Vorgriff zum vorbeschriebenen Verfahrensablauf erfindungsgemäß eine digitale Repräsentation der Beleuchtungsumgebung erstellt, die auch als digitales Abbild derselben bezeichnet werden kann. Zweckmäßigerweise kann hierzu vorgesehen sein, eine Mehrzahl von Abbildungen der Beleuchtungsumgebung mittels der Bildungserfassungseinrichtung unter zumindest mehreren unterschiedlichen Perspektiven zu erfassen, wobei zu einer jeweiligen Abbildung zugeordnete Metadaten zumindest umfassend Positionsdaten der Bildungserfassungseinrichtung bei der jeweiligen Bildungserfassung, respektive Bildaufnahme erfasst werden und auf dieser Grundlage die angegebene digitale Repräsentation der Beleuchtungsumgebung auf der Grundlage der erfassten Abbildungen und der zugeordneten Metadaten erstellt wird. Eine solche digitale Repräsentation kann beispielsweise dazu genutzt werden, um die Beleuchtungsumgebung, beispielsweise ein Großraumbüro oder Ausschnitte daraus, auf einer Anzeigeeinrichtung wie einem Bildschirm darzustellen. Dabei kann die digitale Repräsentation der Beleuchtungsumgebung ausgebildet sein, die notwendigen Informationen bereitzustellen, um beliebige Perspektiven der Beleuchtungsumgebung darzustellen. Die zu jeder Abbildung miterfassten Metadaten können neben Positionsdaten der Bildungserfassungseinrichtung, insbesondere der Kamera, auch Einstellungsparameter, wie beispielsweise eine Objektiveinstellung bei der Verwendung eines Zoomobjektivs und/oder eine Blendeneinstellung umfassen, sodass mit den aufgenommenen Abbildungen, einschließlich der zugeordneten Metadaten, ein möglichst genaues digitales Abbild der Beleuchtungsumgebung erstellt werden kann.

In einer Ausführungsform kann das Erstellen eines digitalen Abbilds der Beleuchtungsumgebung neben der Erfassung der Raumgeometrie bzw. der räumlichen Gestaltung der Beleuchtungsumgebung, und der sich im Raum befindlichen Gegenstände wie Mobiliar, Beleuchtungskomponenten wie Leuchten, Schalten, Taster, Präsenz- oder Lichtsensoren auch das Erkennen derartiger Gegenstände durch Bildverarbeitung, insbesondere mit Mustererkennung, umfassen. Ferner kann dabei vorgesehen sein, durch Herunterladen von weiteren Informationen von vorgegebenen Datenbanken zu den innerhalb der Beleuchtungsumgebung erkannten Gegenständen, um ein möglichst genaues digitales Abbild der Beleuchtungsumgebung bereitzustellen und abzuspeichern, sodass dieses für nachfolgende Bearbeitungen zur Verfügung steht.

Es kann jedoch auch vorgesehen sein, dass das Erstellen eines digitalen Abbilds der Beleuchtungsumgebung im Wesentlichen die Erfassung der Raumgeometrie bzw. der räumlichen Gestaltung der Beleuchtungsumgebung bzw. eines Abschnitts der Beleuchtungsumgebung, u.U. einschließlich der sich im Raum befindlichen Gegenstände umfasst, ohne das alle Gegenstände, insbesondere Beleuchtungskomponenten wie Leuchten, Schalter, Tasten, Präsenz- oder Lichtsensoren erkannt werden. Eine solche Vorgehensweise vereinfacht letztlich das erfindungsgemäße Verfahren, da der Aufwand zur Erstellung des digitalen Abbilds der Beleuchtungsumgebung oder eines Abschnittes der Beleuchtungsumgebung vermindert ist, wobei in dieser Ausführungsform die Detailtreue bzw. die Genauigkeit des digitalen Abbildes der Beleuchtungsumgebung oder eines Abschnittes der Beleuchtungsumgebung im Laufe der Umsetzung des erfindungsgemäßen Verfahrens zur Positionsbestimmung mit jeder erfassten und positionsbestimmten signalisierenden Komponente der Beleuchtungsumgebung dadurch zunehmen kann, dass die erfassten und positionsbestimmten und damit erkannten Komponenten der Beleuchtungsumgebung in das digitale Abbild der Beleuchtungsumgebung bzw. eines Abschnitts der Beleuchtungsumgebung aufgenommen werden.

Zweckmäßigerweise kann dann die Ermittlung der Position der jeweiligen signalisierenden Komponente des Beleuchtungssystems innerhalb der Beleuchtungsumgebung durch die Bildverarbeitung auf der Basis der digitalen Repräsentation der Beleuchtungsumgebung und der jeweiligen Abbildung, sowie der dieser zugeordneten Metadaten der signalisierenden Komponente durchgeführt werden.

Es kann vorgesehen sein, dass die digitale Repräsentation der Beleuchtungsumgebung zunächst für einen Abschnitt der Beleuchtungsumgebung erstellt wird, dann innerhalb dieses Abschnittes wie beschrieben, Positionen der signalisieren Komponenten durch eine Bildverarbeitung auf der Basis der jeweiligen Abbildung und der jeweiligen zugeordneten Metadaten ermittelt und eine jeweilige positionsbezogene Betriebsadresse zu der jeweiligen signalisierenden Komponente festgelegt und zugeordnet wird. Im Anschluss daran kann gemäß diesem erfindungsgemäßen Verfahren für einen weiteren, insbesondere zum erstgenannten benachbarten oder mit diesem überlappenden Abschnitt der Beleuchtungsumgebung das digitale Abbild durch das Erfassen einer Mehrzahl von Abbildungen dieses Abschnittes und durch datentechnische Verarbeitung der erfassten Abbildungen und der zugeordneten Metadaten erstellt werden, worauf sich wiederum die Ermittlung der Positionen der signalisieren Komponenten durch eine Bildverarbeitung auf der Basis der jeweiligen Abbildung und der jeweiligen, den Abbildungen zugeordneten Metadaten und die Festlegung und Zuordnung einer jeweiligen positionsbezogenen Betriebsadresse zu der jeweiligen signalisierenden Komponente anschließen kann.

Erkennbar kann auf die beschriebene Weise in der Art eines kontinuierlichen Prozess zum einen ein vollständiges digitales Abbild der gesamten Beleuchtungsumgebung und zum anderen für alle zur optischen Signalisierung ausgebildeten Komponenten des Beleuchtungssystem eine positionsbezogene Betriebsadresse festgelegt und zugeordnet werden. Ein solcher kontinuierlicher Prozess kann beispielsweise dadurch realisiert sein, dass sich ein Benutzer, welcher ein mit der notwendigen Funktionalität ausgestattetes Datenendgerät, beispielsweise ein Smartphone oder ein Tablet, auf welchem ein Programm zur Umsetzung des erfindungsgemäßen Verfahrens abläuft, innerhalb der Beleuchtungsumgebung bewegt und zur Aufnahme von Abbildungen der Beleuchtungsumgebung bzw. innerhalb der Beleuchtungsumgebung trägt, wobei das Programm vollautomatisch ohne weiteres Zutun des Benutzers ablaufen kann. Es kann jedoch auch vorgesehen sein, dass das Datenendgerät zur Benutzereingabe ausgebildet ist, beispielsweise zum Überspringen der gerade zum Signalisieren angesteuerten Signalisierungskomponente und/oder zur Eingabe einer Höhe einer gerade zum Signalisieren angesteuerten Signalisierungskomponente zum Boden, was im bestimmten Betriebssituationen die Ermittlung der Position der signalisierenden Komponente erleichtern kann. Dagegen ist die Ermittlung der Position der signalisierenden Komponente in die beiden anderen Richtungen (X,Y) in der Regel unkritischer und ohne besondere Benutzereingabe durchführbar, da sich der Benutzer wie beschrieben in dieser Ebene bewegt und insofern in dieser Ebene eine genauere Ermittlung der Position der jeweils signalisierenden Komponente möglich ist.

Vorzugsweise kann vorgesehen sein, dass die Positionsdaten der jeweiligen aufgenommenen Abbildungen Sensordaten zumindest eines Gyroskops und/oder eines Beschleunigungssensors umfassen. Allgemein kann eine solche Positions- und/oder Ausrichtungssensorik direkt in der verwendeten Bildungserfassungseinrichtung, insbesondere Kameraeinrichtung, angeordnet sein. Es ist jedoch auch möglich, Daten über die Perspektive der Kamera für die Abbildung und/oder Position der Kamera zu dem jeweiligen Kamerabild über eine externe Sensorik bereitzustellen. Die Angabe "Ausrichtung" der Kameraeinrichtung kann allgemein die Orientierung der Kameraeinrichtung im Raum in Bezug auf eine ausgezeichnete Achse oder Richtung der Kameraeinrichtung meinen, beispielsweise in Bezug auf die optische Achse einer solchen Kameraeinrichtung.

Vorzugsweise kann vorgesehen sein, dass die Bildverarbeitung zum Ermitteln der Position der jeweils signalisierenden Komponente unter Anwendung von maschinellem Lernen durchgeführt wird, insbesondere unter Anwendung einer Bildverarbeitung mit Mustererkennung unter Anwendung eines neuronalen Netzwerkes. Je nach Ausführungsform kann beispielsweise ein SSD (Single Shot Multibox Detector) oder ein YOLO (You only look once)- Algorithmus zur Anwendung kommen, wobei letzterer bei der Steuerung des Verfahrens mit mobilen Datenendgeräten wie Smartphones und Tablets erfindungsgemäß bevorzugt wird.

Zur Bereitstellung einer hohen Detailtreue bei der ermittelten digitalen Repräsentation, d. h. des digitalen Abbildes der Beleuchtungsumgebung, kann vorgesehen sein, dass das Erfassen der Mehrzahl von Abbildungen der Beleuchtungsumgebungen in einem Betriebszustand des Beleuchtungssystems durchgeführt wird, bei welchem alle Signalisierungskomponenten des Beleuchtungssystems, beispielsweise alle Leuchten sowie alle zur Signalisierung eingerichteten Sensoren in einen vorgegebenen Signalisierungszustand gesteuert sind. Dabei können sie in den gleichen Signalisierungszustand gesteuert sein, beispielsweise zum Leuchten bzw. Signalisieren oder ausgeschaltet sein, gleichbedeutend, dass kein optisches Signal abgegeben wird. Ein solches optisches Signal kann in Bezug auf eine Leuchte durch die Einstellung beispielsweise eines Nennbetriebes oder eines vorgegebenen Dimmbetriebs realisiert sein. In Bezug auf Sensoren, wie Lichtsensoren oder Präsenzsensoren, können diese zum Einschalten ihrer Signalisierungslampe angesteuert sein bzw. werden. Derartige Signalisierungslampen an Sensoren werden beispielsweise im Betrieb des jeweiligen Sensors verwendet um die Erfassung einer Präsenz im Erfassungsbereich im Falle eines Präsenzsensors oder die Erfassung eines vorgegebenen Lichtpegels bei einem Lichtsensor anzuzeigen. Als Signalisierungszustand der Signalisierungskomponenten des Beleuchtungssystems für die Erfassung des digitalen Abbildes der gesamten Beleuchtungsumgebung bzw. eines Abschnittes derselben ist der An-Zustand zu bevorzugen, da insofern die größte Helligkeit bei der Aufnahme der Abbildungen der Beleuchtungsumgebung bereitsteht, was die Datenverarbeitung erleichtert. Entsprechend kann dann vorzugsweise das Ansteuern der jeweiligen Signalisierung über eine zugeordnete Inbetriebnahmeadresse zur Abgabe einer optischen Signalisierung darin bestehen, die jeweilige Komponente zum Herunterdimmen bzw. zum Ausschalten zu veranlassen.

Wie dargestellt kann nach der Erfassung des digitalen Abbildes der Beleuchtungsumgebung, die unter Umständen auch schon die Information umfassen kann, an welchen Positionen innerhalb der Beleuchtungsumgebung eine signalisierende Komponente des Beleuchtungssystems angeordnet ist, umfassen kann, für jede der signalisierenden Komponente eine Positionsbestimmung und Zuordnung einer jeweiligen positionsbezogenen Betriebsadresse durchgeführt werden. Damit kann dann eine Zuordnung einer jeweiligen Inbetriebnahmeadresse der jeweiligen signalisierenden Komponente zu einer positionsbezogenen Betriebsadresse erfolgen und insbesondere abgespeichert werden.

Zweckmäßigerweise kann vorgesehen sein, durch eine Bildverarbeitung, insbesondere durch eine bildbasierte Mustererkennung in der digitalen Repräsentation der Beleuchtungsumgebung Objekte einer vorgegebenen Objektklasse "Leuchte" oder "Sensor" zu erkennen und in der digitalen Repräsentation der Beleuchtungsumgebung zu markieren, beispielsweise in Form eines Kreises, Viereckes oder als 3D-Körper bei einer Darstellung der digitalen Repräsentation an einer Anzeigevorrichtung, beispielsweise einem Bildschirm. Durch eine solche Maßnahme kann ein Nutzer die Erkennung eines Signalisierungsobjektes des Beleuchtungssystems beispielsweise an einem Bildschirm dadurch verfolgen, dass nach der Erkennung eine entsprechende Markierung innerhalb eines Positionsbereiches der erkannten Objekte angegeben wird.

Zur Erleichterung der weiteren Verarbeitung kann zweckmäßigerweise vorgesehen sein, dass nach der Erfassung von Objekten der Objektklasse "Leuchte" oder "Sensor" diese in der digitalen Repräsentation der Beleuchtungsumgebung mit ihren zugeordneten, durch die Bildverarbeitung ermittelten Positionsdaten gespeichert werden. Damit stehen diese für die nachfolgende Zuordnung einer jeweiligen positionsbezogenen Betriebsadresse der Komponenten zur Verfügung.

Um eine hohe Wahrscheinlichkeit bei der Mustererkennung in den Daten der digitalen Repräsentation der Beleuchtungsumgebung zur Erfassung der Objekte "Leuchten" und/oder "Sensoren" bereitzustellen, weist diese Mustererkennung zweckmäßigerweise die Schritte auf:
- Erfassen von Merkmalen, insbesondere antrainierten Merkmalen wie Kanten, Ecken, Farben, Reflektanz in der digitalen Repräsentation der Beleuchtungsumgebung und Zuordnen der aufgefundenen Merkmale zu vorgegebenen Objekten, insbesondere zu Objekten der Objektklasse "Leuchte" und/oder "Sensor" durch Vergleich mit in einem Speicher abgelegten Objekten und deren zugeordneten Merkmalen und Durchführung einer Bewertung des Vergleichs.

Dabei kann vorgesehen sein, dass bei Erreichen einer vorgegebenen Wahrscheinlichkeitsschwelle eine entsprechende Zuordnung eines Bereichs innerhalb der digitalen Repräsentation der Beleuchtungsumgebung einem Objekt einer der Objektklassen "Leuchte" oder "Sensor" erfolgt.

Zweckmäßigerweise kann dabei vorgesehen sein, dass die Mustererkennung bei der Erfassung einer digitalen Repräsentation der Beleuchtungsumgebung auf der Grundlage eines Algorithmus zur lernfähigen Mustererkennung durchgeführt wird, sodass die Erkennungsgüte durch vorab durchgeführte Lernprozesse verbessert werden kann. Ein solches maschinelles Lernen kann insbesondere mit der Durchführung einer Bildverarbeitung mit Mustererkennung unter Nutzung eines neuronalen Netzwerkes zur Anwendung kommen. Je nach Ausführungsform kann beispielsweise ein SSD (Single Shot Multibox Detector" oder ein YOLO (You only look once)- Algorithmus zur Anwendung kommen, wobei letzterer bei Steuerung des Verfahrens mit mobilen Datenendgeräten wie Smartphones und Tablets erfindungsgemäß bevorzugt wird.

Nachdem eine Erfassung aller Objekte der Objektklasse "Leuchte" oder "Sensor" innerhalb der digitalen Repräsentation der Beleuchtungsumgebung fertiggestellt ist, können erfindungsgemäß die obenstehend beschriebenen Verfahrensschritte zur Positionsbestimmung und Zuordnung einer jeweiligen positionsbezogenen Betriebsadresse zu den Signalisierungskomponenten des Beleuchtungssystems durchgeführt werden. Wie dargelegt, können zu diesem Zweck alle Signalisierungskomponenten in einen vorbestimmten, beispielsweise in einen Aus- Zustand gesteuert und dann nachfolgend einzeln in einen An-Zustand gesteuert werden, um die gewünschte Zuordnung der Leuchte zu einer Betriebsadresse durchzuführen.

Nach der Erfassung der digitalen Repräsentation der Beleuchtungsumgebung des Beleuchtungssystems einschließlich der Erkennung von Signalisierungskomponenten des Beleuchtungssystems wie "Leuchten" und/oder "Sensoren" und ggf. der Vervollständigung der digitalen Repräsentation der Beleuchtungsumgebung des Beleuchtungssystems mit den festgelegten und zugeordneten positionsbezogenen Betriebsadressen der Beleuchtungskomponenten kann zweckmäßigerweise vorgesehen sein, das erfasste digitale Abbild der Beleuchtungsumgebung nach vorgegebenen Kriterien mit in einem Speicher abgelegten Beleuchtungsplänen abzugleichen, wobei aus einem, nach den vorgegebenen Kriterien nächstliegenden Beleuchtungsplan, diesem zugeordnete Betriebsparameter oder auch Leuchtszenen zum Betrieb des Beleuchtungssystems ausgewählt werden können. Derartige Kriterien können beispielsweise die geometrische Anordnung von Leuchten, die Anzahl der Leuchten, die Anzahl von Sensoren etc. des Beleuchtungssystems in der diesbezüglichen Beleuchtungsumgebung sein.

Vorzugsweise kann vorgesehen sein, die mit den positionserfassten Signalisierungskomponenten vervollständigte digitalen Repräsentation der Beleuchtungsumgebung des Beleuchtungssystems mit in einem Speicher abgelegten Beleuchtungsplan abzugleichen, insbesondere durch eine geometrische Transformation durch Drehung und/oder Verschiebung, wodurch die erfasste Signalisierungskomponenten den Beleuchtungskomponenten des Beleuchtungsplans zuordnenbar sind, insbesondere für eine nachfolgende Gruppierung der Beleuchtungskomponenten.

In einer besonders zweckmäßigen Ausführungsform kann auch vorgesehen sein, dass Information aus dem, nach den vorgegebenen Kriterien nächstliegenden Beleuchtungsplan zu einer Gruppierung von Leuchten zum Betrieb des Beleuchtungssystems entnommen wird, und den gruppierten Leuchten oder Leuchtquellen die gleiche Betriebsadresse zugeordnet wird, über welche sie von der Steuerungseinrichtung steuerbar sind.

In einer anderen Ausführungsform kann auch vorgesehen sein, eine solche Gruppierung von Leuchten bzw. von Leuchtquellen durch Benutzereingabe festzulegen. Insofern kann vorgesehen sein, dass über eine Eingabeeinrichtung mehrere als Leuchten oder Leuchtquellen ausgebildete Signalisierungskomponenten des Beleuchtungssystems gruppiert werden und den gruppierten Leuchten oder Lichtquellen die gleiche Betriebsadresse zugeordnet wird über welche sie von der Steuerungseinrichtung ansteuerbar sind.

Vorrichtungsseitig wird die obige Aufgabe gelöst durch ein System zur Positionsbestimmung für eine Mehrzahl von an einer Steuerungseinrichtung angeschlossene, zur optischen Signalisierung ausgebildete Signalisierungskomponenten eines Beleuchtungssystems in einer Beleuchtungsumgebung und zur Zuordnung einer jeweiligen positionsbezogenen Betriebsadresse zu den Signalisierungskomponenten mit den Merkmalen von Anspruch 10.

Zweckmäßigerweise kann die Steuereinrichtung dann ausgebildet sein, die vom Beleuchtungssystem umfassten Signalisierungskomponenten über die zugeordnete positionsbezogene Betriebsadresse anzusteuern. Hierzu kann zweckmäßigerweise eine Speichereinrichtung vorgesehen sein, in welcher die Zuordnung der positionsbezogenen Betriebsadresse zu der jeweiligen Leuchte, insbesondere zu der Inbetriebnahmeadresse der jeweiligen Leuchte abgelegt und von der Steuereinrichtung abgefragt werden kann.

Um zu den erfassten Abbildungen der Beleuchtungsumgebung zugehörige Metadaten zu erfassen, kann vorgesehen sein, dass das erfindungsgemäße System eine der Bilderfassungseinrichtung zugeordnete Positions- und Ausrichtungserfassungseinrichtung aufweist, die ausgebildet ist zum Erfassen von, einem jeweiligen Bild der Beleuchtungsumgebung zugeordneten Metadaten wie Positionsinformation der Bilderfassungseinrichtung, Information bezüglich der Ausrichtung der Bilderfassungseinrichtung im Raum und/oder Information bezüglich der Einstellung (Betriebseinstellung) der Bilderfassungseinrichtung wie Blende und/oder Objektivbrennweite bei der Bildaufnahme. In einer besonders zweckmäßigen Ausführungsform kann vorgesehen sein, diese Positions- und Ausrichtungserfassungseinrichtung in der Bilderfassungseinrichtung, wie beispielsweise einer Kamera, zu integrieren.

Um eine Erfassung der Positionierung und eine Zuordnung einer Betriebsadresse für jede der Signalisierungskomponenten des Beleuchtungssystems innerhalb der Beleuchtungsumgebung bereitzustellen, kann die Bilderfassungseinrichtung ausgebildet sein, zur Erstellung einer Mehrzahl von, insbesondere in unterschiedlichen Perspektiven, erfassten Abbildungen der Beleuchtungsumgebungen und die Datenverarbeitung ausgebildet sein zur Ermittlung eines digitalen Abbildes der Beleuchtungsumgebung durch eine datentechnische Verarbeitung der aufgenommene Bild- und zugeordneten Metadaten, wobei das System einen Speicher aufweisen kann zur Speicherung des ermittelten digitalen Abbildes der Beleuchtungsumgebung.

Um das beschriebene erfindungsgemäße Verfahren zu starten bzw. manuelle Eingabe durch einen Benutzer zu ermöglichen, kann zweckmäßigerweise vorgesehen sein, dass das System eine mit der Steuereinrichtung verbindbare Eingabeeinrichtung umfasst zur manuellen Eingabe, insbesondere zur Gruppierung von Leuchten des Beleuchtungssystems und/oder zur Initialisierung bzw. Starten des Verfahrens zur Positionsbestimmung für eine Mehrzahl von an der Steuereinrichtung angeschlossenen, zur optischen Signalisierung ausgebildeten Komponenten eines Beleuchtungssystems in einer Beleuchtungsumgebung und zur Zuordnung einer jeweiligen positionsbezogenen Betriebsadresse zu den jeweiligen Signalisierungskomponenten.

Die Durchführung kann in einer Ausführungsform der Erfindung durch das Vorsehen eines Datenendgeräts für das erfindungsgemäße System erleichtert werden, wobei dieses Datenendgerät zumindest teilweise die Steuereinrichtung des Systems umfassen kann und/oder ausgebildet sein kann, eine, insbesondere zentrale, Steuereinrichtung des Beleuchtungssystems anzusteuern. Dabei kann dieses Datenendgerät die Bilderfassungseinrichtung sowie die der Bilderfassungseinrichtung zugeordnete Positionserfassungs- und Ausrichtungserfassungseinrichtung, die Datenverarbeitungseinrichtung, die Eingabeeinrichtung sowie eine Anzeigeeinrichtung aufweisen, wobei die Anzeigeeinrichtung insbesondere zur Anzeige von aus dem digitalen Abbild der Beleuchtungsumgebung erstellten Ansichten der Beleuchtungsumgebung ausgebildet sein kann.

In bestimmten Ausführungsformen, bei welchen eine sehr große Anzahl von Beleuchtungskomponenten an eine zentrale Steuereinrichtung angeschlossen sind, kann ein zugeordnetes Bussystem eine Vielzahl von Bus-Gateways, beispielsweise DALI-Gateways aufweisen, wobei ein einzelner, an ein solches Gateway angeschlossener Busabschnitt maximal eine vorgegebene Anzahl von Busteilnehmern bzw. Beleuchtungskomponenten die an den Bus angeschlossen sind, aufweisen kann. Im Falle eines DALI-Bussystems können an ein entsprechendes DALI-Gateway maximal 64 Busteilnehmer bzw. Beleuchtungskomponenten angeschlossen werden. In einem derartigen System, umfassend eine Mehrzahl derartiger DALI-Gateways mit daran jeweils angeschlossenen Busteilnehmern, werden zur Umsetzung des erfindungsgemäßen Verfahrens die jeweiligen Busabschnitte bzw. DALI Gateways nacheinander angesteuert, sodass sequenziell alle Busabschnitte mit den daran angeschlossenen Beleuchtungskomponenten dem erfindungsgemäßen Verfahren unterworfen werden bis alle DALI-Gateways und damit allen jeweils daran angeschlossenen Beleuchtungskomponenten, hier Leuchten/Leuchtquellen und Sensoren, des gesamten Beleuchtungssystems positionsbezogene Betriebsadressen zugeordnet sind.

Die Erfindung wird im Folgenden durch das Beschreiben einer Ausführungsformen und diesbezüglicher Abwandlungen unter Bezugnahme auf die beiliegenden Figuren erläutert, wobei
- Fig. 1: in einer Seitenansicht eine typische Beleuchtungsumgebung eines Beleuchtungssystems,
- Fig. 2: in einem Ablaufdiagramm eine Ausführungsform eines erfindungsgemäßen Verfahren zur Positionsbestimmung und Zuordnung einer Betriebsadresse für eine Mehrzahl von signalisierenden Komponenten eines Beleuchtungssystems,
- Fig. 3: in einem Ablaufdiagramm die Verfahrensschritte zur Erstellung eines digitalen Abbildes der Beleuchtungsumgebung,
- Fig. 4: in einem Ablaufdiagramm Verfahrensschritte zur bildbasierten Mustererkennung bei der Erstellung des digitalen Abbildes der Beleuchtungsumgebung, und
- Fig. 5: in einer Prinzipdarstellung ein Datenendgerät zur Unterstützung der Ausführung des erfindungsgemäßen Verfahrens,
zeigt.

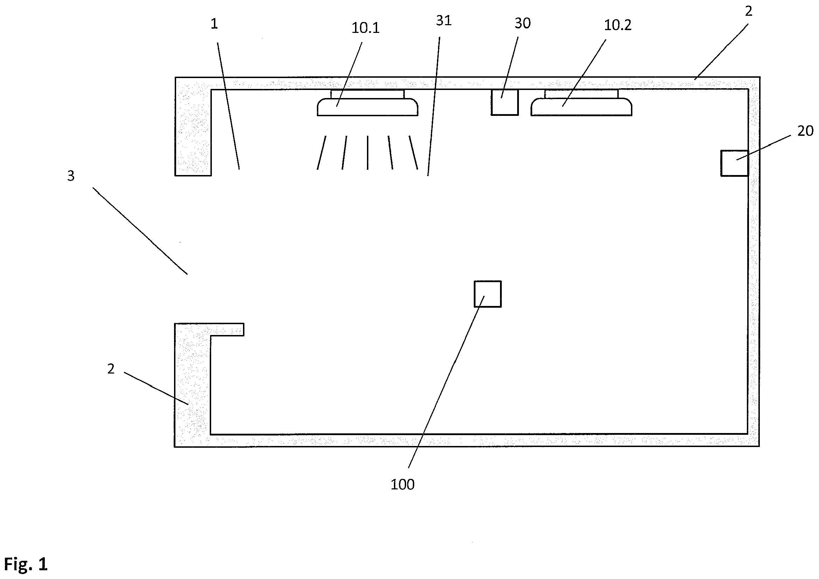

Figur 1 zeigt eine Seitenansicht eines Raums, der die Beleuchtungsumgebung 1 eines im Raum installierten Beleuchtungssystems darstellt. Dieses umfasst in der beschriebenen Ausführungsform mehrere Leuchten, Betätigungselemente wie Schalter und Taster, einen Lichtsensor sowie einen Präsenzsensor, wobei die einzelnen Komponenten des Beleuchtungssystems zumindest teilweise steuerungstechnisch mit einer Steuereinrichtung verbunden sind, insbesondere über einen Steuerbus. In der in Figur 1 angegebenen Beleuchtungsumgebung 1 sind die beiden Leuchten 10.1, 10.2, ein Lichtsensor 20 zur Erfassung der Beleuchtungsstärke sowie einem Präsenzsensor 30 dargestellt, welcher die Präsenz eine Person im Raum erfasst. Diese Komponenten des Beleuchtungssystems weisen in der beschriebenen Ausführungsform der Erfindung jeweils mit einer DALI-Schnittstelle auf und sind über einen DALI-Bus an eine zentrale Steuerung des Beleuchtungssystems angeschlossen. Die Sensoren 20, 30 weisen in der beschriebenen Ausführungsform jeweils eine in der Figur nicht dargestellte Betriebsleuchte auf, welche einen vorgegebenen Betriebszustand optisch anzeigt. Beispielsweise kann der Lichtsensor ausgebildet sein, bei Unterschreiten einer vorgegebenen Beleuchtungsstärkenschwelle eine optische Signalisierung in Form einer permanent eingeschalteten Betriebsleuchte anzuzeigen. In ähnlicher Weise ist in der beschriebenen Ausführungsform der Präsenzsensor ausgebildet, bei Erfassen einer Präsenz einer Person innerhalb der Beleuchtungsumgebung eine optische Signalisierung in Form einer permanent eingeschalteten Betriebsleuchte anzuzeigen, wobei die Betriebsleuchte zum Erlöschen angesteuert wird, wenn keine Präsenz mehr erfasst wird.

Dagegen sind die Leuchten 10.1, 10.2 bzw. Leuchtquellen des Beleuchtungssystems schon aus sich heraus als Komponenten des Beleuchtungssystems anzusehen, welche zur Abgabe einer optischen Signalisierung ausgebildet sind, beispielsweise dadurch, dass sie in einen Betriebszustand überführbar sind, in welchem Licht abgegeben wird. Bei der Durchführung des erfindungsgemäßen Verfahrens wird in der beschriebenen Ausführungsform ein in der Abbildung der Figur 1 auch angegebenes Datenendgerät in Form eines Smartphones 100 verwendet.

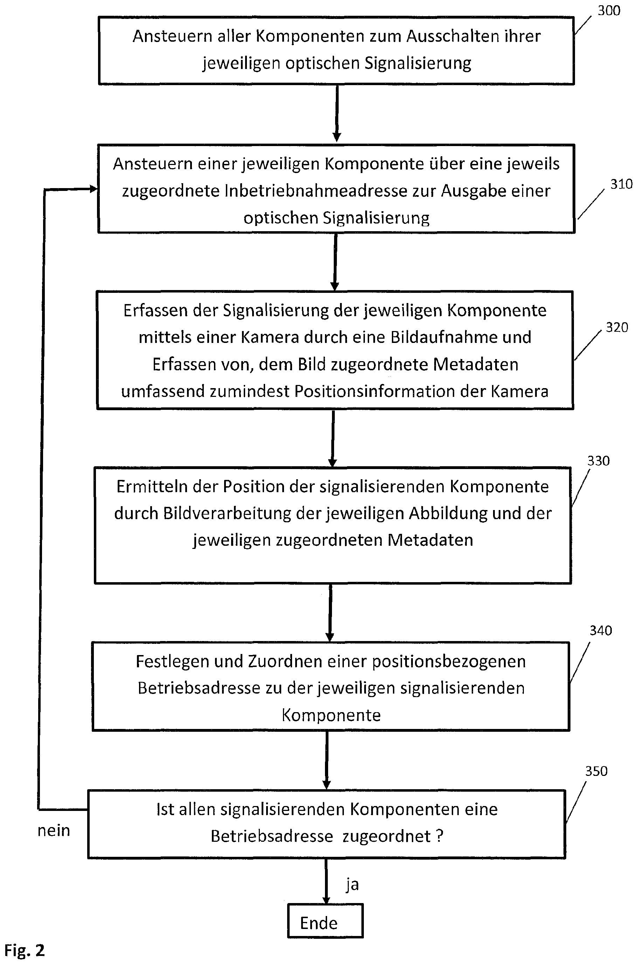

Bei der Durchführung des erfindungsgemäßen Verfahrens zur Positionsbestimmung für eine Mehrzahl von an eine Steuerungseinrichtung angeschlossenen Komponenten eines Beleuchtungssystems in einer Beleuchtungsumgebung und Zuordnung einer jeweiligen positionsbezogenen Betriebsadresse zu den Komponenten, siehe das entsprechende Ablaufdiagramm der Figur 2, wird für jede der Signalisierungskomponenten des Beleuchtungssystems eine Anzahl von Verfahrensschritten durchgeführt, wobei diese Verfahrensschritte für die unterschiedlichen Signalisierungskomponenten des Beleuchtungssystems sequentiell, d. h. zeitlich nacheinander durchgeführt werden. ***

In der beschriebenen Ausführungsform werden dabei zunächst die jeweiligen Signalisierungseinrichtungen, d. h. bei den Leuchten 10.1, 10.2 die jeweilige Lichtquelle selbst und bei Sensoren 20, 30 die jeweilige Betriebsleuchte zum Ausschalten angesteuert (Schritt 300). Die Steuereinrichtung steuert dann eine der Signalisierungskomponenten des Beleuchtungssystems über eine jeweilige zugeordnete Inbetriebnahmeadresse zur Abgabe einer optischen Signalisierung an, d. h. in der beschriebenen Ausführungsform zum Leuchten an (Schritt 310). Die Signalisierung der angesteuerten Komponente des Beleuchtungssystems wird nun mittels einer Kamera durch Erfassung eines Bildes der Beleuchtungsumgebung, gleichbedeutend mit der Erfassung oder Aufnahme eines Bildes, innerhalb der Beleuchtungsumgebung erfasst. Dabei werden ferner zu einer jeweiligen Abbildung zugeordnete Metadaten erfasst, die je nach Ausführungsform eine Vielzahl von Informationen umfassen können, in jedem Fall jedoch Positionsinformation bzw. -daten der Bilderfassungseinrichtung bei der Aufnahme des Bildes. In der beschriebenen Ausführungsform ist die Bilderfassungseinrichtung als Kamera ausgebildet, welche eine Positions- und Ausrichtungserfassungseinrichtung aufweist in der Form eines Gyroskops sowie eines Beschleunigungssensors. Die von diesen Sensoren abgegebenen Daten bezeichnen eindeutig den Aufnahmeort der jeweiligen Abbildung innerhalb der Beleuchtungsumgebung (Schritt 320). In der beschriebenen Ausführungsform umfassen die zu jedem Bild innerhalb der Beleuchtungsumgebung abgespeicherten Metadaten neben der Position der Kamera auch deren Ausrichtung bei der jeweiligen Bildaufnahme im Raum, sowie Informationen über die Einstellung der Kamera, insbesondere Blende und/oder objektive Brennweite.

Im Schritt 330 erfolgt nun auf der Basis einer Bildverarbeitung auf der Grundlage der jeweiligen Abbildung der signalisieren Komponente sowie auf der Grundlage der zugeordneten Metadaten, insbesondere der Positionsdaten der Kamera bei der Aufnahme der Abbildung, eine Positionsbestimmung für die signalisierende Beleuchtungskomponente. Ergebnis einer derartigen Berechnung sind eindeutige Koordinationsdaten für die gerade signalisierende Beleuchtungskomponente, d. h. eine der beiden Leuchten 10.1, 10.2 oder einer der beiden Sensoren 20, 30. In der beschriebenen Ausführungsform werden hierzu Daten der erzeugten Abbildung der signalisierenden Komponente und der diesbezüglichen Metadaten in Bezug gesetzt zu Informationen über die Beleuchtungsumgebung.

In der beschriebenen Ausführungsform werden diese Informationen über die Beleuchtungsumgebung durch eine im Vorfeld erzeugte digitale Repräsentanz der Beleuchtungsumgebung bereitgestellt. Diese auch als digitales Abbild bezeichnete digitale Repräsentanz der Beleuchtungsumgebung wird insofern vor der Durchführung der mit Bezug auf Figur 2 beschriebenen Verfahrensschritte durchgeführt. Das digitale Abbild der Beleuchtungsumgebung umfasst eine Datenmenge oder einen Datensatz, die bzw. der es erlaubt, eine dreidimensionale Darstellung der Beleuchtungsumgebung, hier des Raumes 1 bereitzustellen, derartig, dass mit dem abgespeicherten Datensatz eine Mehrzahl von insbesondere beliebige Perspektivansichten innerhalb des Raumes bzw. der Beleuchtungsumgebung erzeugt werden kann. In der beschriebenen Ausführungsform umfasst dieses digitale Abbild Informationen über die durch Begrenzungsflächen festgelegte Geometrie des Raumes, installierte Beleuchtungskomponenten, d. h. die Leuchten/Leuchtquellen und Sensoren des Beleuchtungssystems, jedoch unter Umständen auch Informationen über im Raum befindliche weitere Gegenstände wie Möbel.

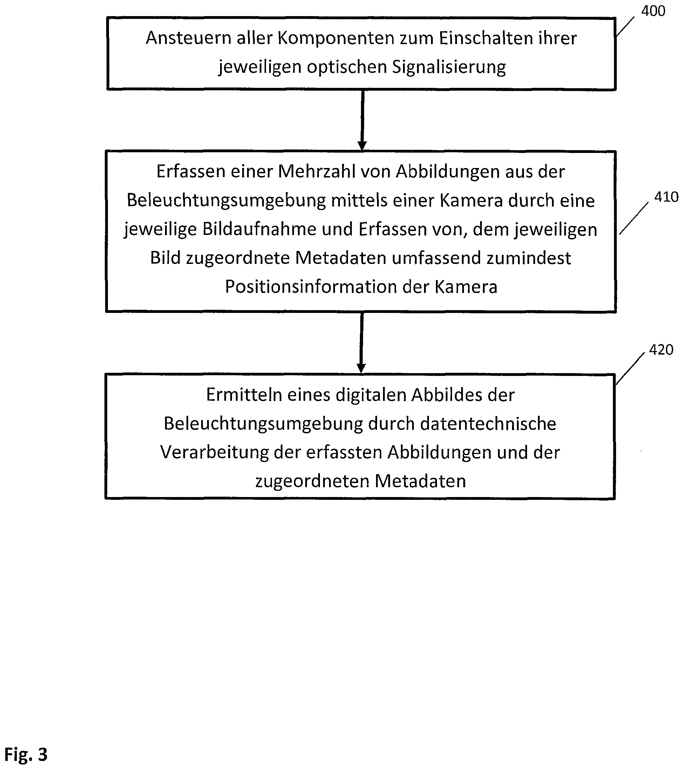

Wesentlich für die Umsetzung der beschriebenen Ausführungsform der Erfindung ist, dass das digitale Abbild der Beleuchtungsumgebung auch Information über die Anordnung bzw. Platzierung der Signalisierungskomponenten des Beleuchtungssystems innerhalb der Beleuchtungsumgebung umfasst, beispielsweise deren Positionskoordinaten und/oder Angaben über die räumliche Ausdehnung und Anordnung der jeweiligen Signalisierungskomponente innerhalb der Beleuchtungsumgebung. Auf die Erzeugung dieses digitalen Abbilds der Beleuchtungsumgebung wird untenstehend mit Bezug auf Figur 3 näher eingegangen.

Nachdem die Koordinaten der signalisierenden Komponente in Schritt 330 des Verfahrensablaufs der Figur 2 wie beschrieben ermittelt wurden, kann in Schritt 340 der ermittelten signalisierenden Komponente eine positionsbezogene Betriebsadresse zugewiesen werden. Die Angabe in "positionsbezogene Betriebsadresse" meint dabei allgemein eine Adresse einer Beleuchtungskomponente, von welcher der Installationsort innerhalb der Beleuchtungsumgebung bekannt ist. Je nach Ausführungsform kann dabei vorgesehen sein, dass die jeweilige Betriebsadresse direkt positionsbezogene Informationen umfasst, sodass sich für einen Anwender die Konfiguration bzw. Einstellung des Beleuchtungssystems erleichtert. Entsprechend der Darstellung der Figur 2 werden die beschriebenen Verfahrensschritte 310-340 so lange wiederholt, bis alle signalisierenden Beleuchtungskomponenten des Beleuchtungssystems erfasst wurden, d. h. für alle Komponenten 10.1, 10.2, 20 und 30 eine positionsbezogene Betriebsadresse ermittelt wurde. Die wie beschrieben ermittelten positionsbezogenen Betriebsadressen der Beleuchtungskomponenten können dann zur Steuerung dieser Komponenten, beispielsweise von einer zentralen Steuereinrichtung des Beleuchtungssystems verwendet werden. Dies kann je nach Ausführungsform dadurch umgesetzt werden, dass die jeweilige positionsbezogene Betriebsadresse in der jeweiligen Beleuchtungskomponente abgelegt wird und diese veranlasst wird, auf die positionsbezogene Betriebsadresse anzusprechen oder bei der Ansteuerung der jeweiligen Komponente eine Umwandlung der positionsbezogenen Betriebsadresse in die Inbetriebnahmeadresse erfolgt.

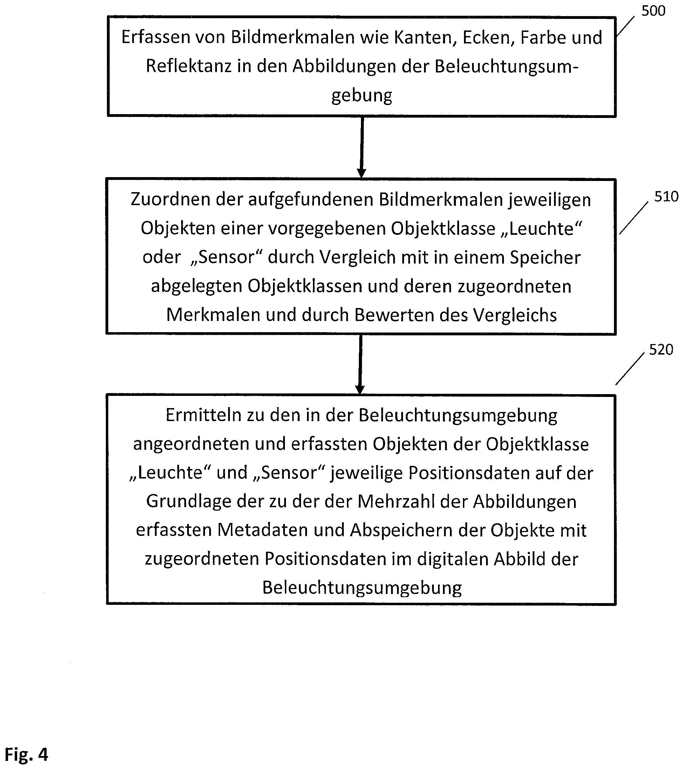

Mit Bezug auf die Ablaufdiagramme der Figuren 3, 4 wird im Folgenden die Erstellung eines digitalen Abbildes der Beleuchtungsumgebung erläutert, auf der Grundlage dessen zusammen mit zumindest einer Abbildung der jeweiligen signalisierenden Beleuchtungskomponente und von, der Abbildung zugeordneten Metadaten eine Festlegung und Zuordnung einer positionsbezogenen Betriebsadresse der jeweiligen signalisierenden Komponente erfolgt. Figur 3 zeigt dabei den grundsätzlichen Ablauf. In der beschriebenen Ausführungsform werden zunächst in Schritt 400 Beleuchtungskomponenten der Beleuchtungsumgebung, die zur Abgabe eines optischen Signals ausgebildet sind, hier Leuchten/Leuchtquellen und Sensoren, zum Einschalten ihrer jeweiligen optischen Signalisierung angesteuert. Insofern werden die Leuchten zum Leuchten und die Sensoren zum Betreiben der Betriebsleuchte angesteuert. Danach erfolgt in Schritt 410 die Erfassung einer Mehrzahl von Abbildungen von bzw. aus der Beleuchtungsumgebung mittels einer Kamera, die in der Regel aus unterschiedlichen Perspektiven aufgenommen werden. Zu jeder dieser Abbildungen werden jeweils zugeordnete Metadaten erfasst, zumindest aufweisend Positionsinformation der Kamera bei der Aufnahme dieser Abbildung. In der beschriebenen Ausführungsform werden darüber hinaus die räumliche Ausrichtung der Kamera sowie Einstellungsparameter der Kamera wie die Objektivbrennweite und/oder die Blende erfasst. Auf der Grundlage dieser erfassten Informationen erfolgt im Schritt 420 über eine Bildverarbeitung unter Ausführung einer bildbasierten Mustererkennung die Ermittlung des beschriebenen digitalen Abbildes (der digitalen Repräsentation) der Beleuchtungsumgebung. Dieses digitale Abbild stellt dabei eine Art digitale Kopie der Beleuchtungsumgebung bereit, die es insbesondere erlaubt, grundsätzlich beliebige Ansichten innerhalb der Beleuchtungsumgebung digital darzustellen, beispielsweise auf einer Anzeigevorrichtung wie einen Bildschirm. Darüber hinaus umfasst in der beschriebenen Ausführungsform dieses digitale Abbild auch Information darüber, wo Beleuchtungskomponenten des Beleuchtungssystems installiert sind, insbesondere Leuchten/Leuchtquellen und Sensoren. Insofern sind Positionsdaten zu diesen signalisierenden Beleuchtungskomponenten auch im digitalen Abbild der Beleuchtungsumgebung abgelegt. Wie obenstehend schon erläutert, wird diese Information in dem mit Bezug auf Figur 2 beschriebenen Verfahren genutzt, um die jeweiligen signalisierenden Beleuchtungskomponenten zu identifizieren und eine positionsbezogene Betriebsadresse zuzuordnen.

Figur 4 zeigt die wesentlichen Verfahrensschritte zur Erzeugung des digitalen Abbildes der Beleuchtungsumgebung auf der Grundlage der erfassten Mehrzahl von Abbildungen aus der Beleuchtungsumgebung sowie der diesen Abbildungen zugeordneten Metadaten, insbesondere der Positionsdaten der Aufnahmekamera. Durch das Vorsehen vorgegebener Bildfilter werden in Schritt 500 Bildmerkmale wie Kanten, Ecken, Farben und/oder Reflektanz in den Abbildungen der Beleuchtungsumgebung erfasst. Diese erfassten Bildmerkmale werden im Schritt 510 jeweiligen Objekten einer vorgegebenen Objektklasse in "Leuchte" oder "Sensor" durch Vergleich mit in einem Speicher abgelegten Objektklassen und deren zugeordneten Merkmalen und durch Bewerten des Vergleichs zugeordnet. Dabei werden Wahrscheinlichkeiten ermittelt, wobei bei einem Überschreiten eines Wahrscheinlichkeitswertes über eine vorgegebene Schwelle das Vorliegen eines Objektes einer entsprechenden Objektklasse angenommen wird. Nachdem die jeweiligen Objekte, hier Leuchten/Leuchtquellen und Sensoren, durch die beschriebene bildverarbeitende Mustererkennung erkannt wurden, wird im nachfolgenden Schritt 520 jedem dieser erkannten Objekte auf der Grundlage der zusammen mit den Abbildungen erfassten Metadaten Positionsdaten zugeordnet. Insofern ist im digitalen Abbild der Beleuchtungsumgebung in der beschriebenen Ausführungsform für jedes der erkannten Objekte bzw. Leuchten/Leuchtquellen und Sensoren eine jeweilige Position, beispielsweise in Form von Koordinaten abgelegt, wobei diese Information dann zur Positionsbestimmung für die jeweilige signalisierende Beleuchtungskomponente und Zuordnung einer positionsbezogenen Betriebsadresse herangezogen wird.

Zur Optimierung der bildverarbeitenden Mustererkennung ist in der beschriebenen Ausführungsform vorgesehen, die zu erfassenden Merkmale in den Abbildungen, wie Kanten, Ecken, Farben und/oder Reflektanz einem vorgegebenen Algorithmus zur Durchführung der Mustererkennung anzutrainieren und darüber hinaus die Mustererkennung als lernfähige Mustererkennung auszuführen.

Zur Erfassung des digitalen Abbildes der realen Beleuchtungsumgebungsinformation wird in der beschriebenen Ausführungsform das Smartphone 100 verwendet, mit welchem für die Erstellung des digitalen Abbildes der Beleuchtungsumgebung eine Mehrzahl von in unterschiedlichen Perspektiven aufgenommenen Kamerabildern der Beleuchtungsumgebung erfasst werden zusammen mit zugeordneten Signalen einer der Kameraeinrichtung zugeordneten Positions- und Ausrichtungserfassungseinrichtung, sodass zu jedem Bild die notwendige Information bezüglich der Perspektive, d.h. dem Aufnahmeort und der Ausrichtung der Kamera mit abgespeichert werden. Das hier verwendete Smartphone weist zu diesem Zweck neben der Kamera ein Gyroskop sowie einen Beschleunigungssensor auf, mit welchen die Lage und Ausrichtung des Smartphone für jede Bildaufnahme ermittelt werden kann. Wie obenstehend beschrieben wird auf der Basis einer mustererkennenden Bildverarbeitung, in der beschriebenen Ausführungsform unter Verwendung eines neuronalen Netzwerkes, aus den erfassten Bildern und den zugeordneten Signalinformationen der Positions- und Ausrichtungserfassungseinrichtung des Smartphones ein zumindest angenähertes digitales Abbild der Beleuchtungsumgebung erstellt und in einem Speicher, insbesondere dem Speicher des Smartphones abgelegt.

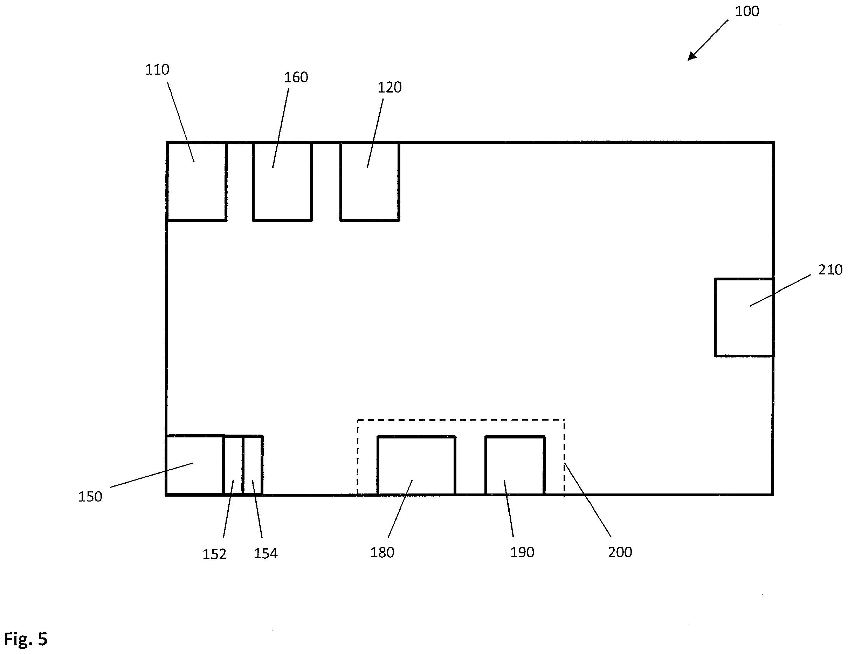

Figur 5 zeigt in einer Prinzipskizze das Datenendgerät 100, hier in Form des Smartphones, das ausgebildet ist, die obigen Verfahrensschritte zur Positionsbestimmung und Zuordnung einer Betriebsadresse für eine Mehrzahl von Beleuchtungskomponenten für ein Beleuchtungssystem in einer Beleuchtungsumgebung auszuführen, wobei das Smartphone ausgebildet ist, hierzu eine Steuereinrichtung des Beleuchtungssystems zur Veranlassung vorgegebener Verfahrensschritte bzw. Teilschritte des erfindungsgemäßen Verfahrens anzusteuern, z.B. eine Leuchte ein- oder auszuschalten. Das Smartphone 100 weist eine Speichereinrichtung 120 sowie eine interne Steuereinrichtung 110 auf. Über in einem Programmspeicher abgelegte Softwareroutinen kann der Ablauf des erfindungsgemäßen Verfahrens vom Smartphone 100 gesteuert werden, die auf einem Mikroprozessor des Geräts 100 ablaufen. Darüber hinaus umfasst das Datenendgerät 100 eine Kameraeinrichtung 150, die ausgebildet ist, Bilder der realen Beleuchtungsumgebung aufzunehmen sowie Einrichtungen 152, 154 in Form eines Gyroskopsensors und eines Beschleunigungssensors zur Ermittlung der Lage und der Ausrichtung des Endgeräts bzw. der Kamera zum Zeitpunkt der jeweiligen Aufnahmen. Insbesondere zur Durchführung der beschriebenen Bildbearbeitung weist das Endgerät 100 darüber hinaus eine Datenverarbeitungseinrichtung 160, beispielsweise in Form einer numerischen Prozesseinheit auf, die in einer anderen Ausführungsform jedoch auch durch die CPU dadurch bereitgestellt werden kann, dass in einem Programmspeicher abgelegtes Programm abgearbeitet wird. Darüber hinaus weist das Datenendgerät 100 zur Durchführung des erfindungsgemäßen Verfahrens je nach Ausführungsform einen Bildschirm 180 zur Darstellung von Kameraaufnahmen bzw. von Ansichten aus dem in einem Speicher abgelegten digitalen Abbild der Beleuchtungsumgebung und eine Eingabeeinrichtung 190 auf, über welche Nutzereingaben erfolgen können. In einer weiteren Ausführungsform kann auch vorgesehen sein, die Eingabeeinrichtung und die Anzeigeeinrichtung bzw. den Bildschirm funktional zusammenzufassen, beispielsweise in Form eines Touchscreens 200 zur Darstellung der beschriebenen Ansichten und zur Durchführung von Bedienereingaben. Darüber hinaus weist das Smartphone 100 der Figur 5 zumindest eine Datenschnittstelle 210 auf, die zweckmäßigerweise als Luftschnittstelle ausgebildet sein kann, um drahtlos einen Austausch zu externen Geräten bereitzustellen, beispielsweise zum Bereitstellen einer Verbindung zu einer Datenbank, in welcher Beleuchtungspläne abgelegt sind, und/oder zur Bereitstellung einer Datenverbindung zu einer Steuereinrichtung des Beleuchtungssystems, mit welcher diese angesprochen bzw. gesteuert werden kann zur Umsetzung eines erfindungsgemäßen Verfahrensschrittes bzw. -teilschritte. Hierdurch kann beispielsweise auch die Möglichkeit geschaffen sein, Einstellungsinformation, insbesondere Information zu betriebsbezogenen Adressen und/oder Gruppierungen von Leuchten z.B. an eine Steuerung des Beleuchtungssystems und/oder direkt an die jeweiligen Beleuchtungskomponenten zu übermitteln.

Nach der Zuordnung einer jeweiligen positionsbezogenen Betriebsadresse zu den jeweiligen Beleuchtungskomponenten des Beleuchtungssystems wie Leuchten/Leuchtquellen und Sensoren gemäß dem Verfahren nach Figur 2 wird in der beschriebenen Ausführungsform das mit diesen Zuordnungen vervollständigte digitale Abbild der Beleuchtungsumgebung mit einer Mehrzahl von, in einem Speicher abgelegten Beleuchtungsplänen abgeglichen, wobei zu einem, nach vorgegebenen Kriterien nächstliegenden Beleuchtungsplan, abgespeicherte Betriebsparameter für die einzelnen Beleuchtungskomponenten oder auch Leuchtszenen zum Betrieb des Beleuchtungssystems aus dem Speicher erfassbar bzw. auslesbar sind. Derartige Abgleich- oder Prüf-Kriterien können beispielsweise die geometrische Anordnung von Leuchten, die Anzahl der Leuchten, die Anzahl von Sensoren etc. des Beleuchtungssystems in der diesbezüglichen Beleuchtungsumgebung sein. Der Speicher zur Ablage zu Beleuchtungsplänen kann sich beispielsweise im Smartphone 100 selbst oder in einer externen Vorrichtung wie einem Server befinden, auf den das Endgerät Zugriff hat, insbesondere über eine Luftschnittstelle.

In der beschriebenen Ausführungsform kann ferner aus dem Speicher Information zu dem, nach den vorgegebenen Kriterien nächstliegenden Beleuchtungsplan, betreffend eine Gruppierung von Leuchten zum Betrieb des Beleuchtungssystems erfasst, und den gruppierten Leuchten oder Leuchtquellen die gleiche Betriebsadresse zugeordnet werden, über welche sie von der Steuerungseinrichtung steuerbar sind. In der angegebenen Ausführungsform ist es darüber hinaus auch möglich, eine solche Gruppierung von Leuchten bzw. von Leuchtquellen durch Benutzereingabe, insbesondere durch eine Benutzereingabe am Smartphone 100, festzulegen. Insofern kann vorgesehen sein, dass über eine Eingabeeinrichtung mehrere als Leuchten oder Leuchtquellen ausgebildete Signalisierungskomponenten des Beleuchtungssystems gruppiert werden, z.B. den gruppierten Leuchten oder Lichtquellen die gleiche Betriebsadresse zugeordnet werden, über welche sie von der Steuerungseinrichtung ansteuerbar sind. Damit ist es insbesondere möglich, vorgegebene Leuchten im Betrieb zusammen und insofern als zusammengesetzte Leuchte anzusteuern.

In einer nicht dargestellten Ausführungsform umfasst das Beleuchtungssystem eine sehr große Anzahl von Beleuchtungskomponenten, die an eine zentrale Steuereinrichtung angeschlossen sind. Dabei umfasst das zugeordnete Steuerbussystem eine Vielzahl von Bus-Gateways, beispielsweise DALI-Gateways mit jeweils angeschlossenem Busabschnitt, an dem maximal 64 Busteilnehmer bzw. Beleuchtungskomponenten angeschlossen werden können. In einem derartigen System werden zur Umsetzung des erfindungsgemäßen Verfahrens die jeweiligen Busabschnitte bzw. DALI Gateways nacheinander angesteuert, sodass sequenziell alle Busabschnitte mit den daran angeschlossenen Beleuchtungskomponenten dem erfindungsgemäßen Verfahren unterworfen werden bis alle DALI-Gateways und damit allen diesen jeweils zugeordneten Beleuchtungskomponenten, hier Leuchten/Leuchtquellen und Sensoren, des gesamten Beleuchtungssystems innerhalb der Beleuchtungsumgebung positionsbezogene Betriebsadressen zugeordnet sind.

### Bezugszeichenliste

- 1: Beleuchtungsumgebung, Raum
- 2: Wand
- 3: Fenster
- 10.1, 10.2: Leuchte
- 20: Lichtsensor
- 30: Präsenzsensor
- 100: Datenendgerät, Smartphone
- 110: Controller des Datenendgeräts, Steuereinrichtung
- 120: Speichereinrichtung, Speicher
- 150: Kamera; Kameraeinrichtung, Bilderfassungseinrichtung
- 152: Positionserfassungseinrichtung/Positionserfassungsmittel der Kamera
- 154: Ausrichtungserfassungseinrichtung der Kamera
- 160: Datenverarbeitungseinrichtung
- 180: Bildschirm / Display/ Anzeigeeinrichtung
- 190: Eingabeeinrichtung, Eingabemittel
- 200: Touchscreen
- 210: Datenschnittstelle

## Patentansprüche

1. Verfahren zur Positionsbestimmung für eine Mehrzahl von an eine Steuereinrichtung angeschlossenen, zur optischen Signalisierung ausgebildeten Komponenten eines Beleuchtungssystems, insbesondere Leuchten (10.1., 10.2), Lichtquellen und/oder Sensoren (20, 30), in einer Beleuchtungsumgebung (1) und Zuordnung einer jeweiligen positionsbezogenen Betriebsadresse zu den Signalisierungskomponenten,
wobei das Verfahren in einem zeitlichen Vorgriff zum nachbeschrieben Ablauf der Schritte c) bis f) umfasst:
a) Erfassen einer Mehrzahl von Abbildungen der Beleuchtungsumgebung (1) unter zumindest mehreren unterschiedlichen Perspektiven, wobei alle Signalisierungskomponenten des Beleuchtungssystems bei der Erfassen der Mehrzahl von Abbildungen in einem vorgegebenen Signalisierungszustand gesteuert sind, und wobei zu einer jeweiligen Abbildung zugeordnete Metadaten, zumindest umfassend Positionsdaten der Bilderfassungseinrichtung, erfasst werden, und
b) Erstellen einer digitalen Repräsentation der Beleuchtungsumgebung (1) umfassend die Raumgeometrie bzw. die räumliche Gestaltung der Beleuchtungsumgebung durch datentechnische Verarbeitung der erfassten Abbildungen und der zugeordneten Metadaten, und nachfolgend die Schritte c) - f) welche für jede Signalisierungskomponente aus der Mehrzahl von Signalisierungskomponenten sequentiell ausgeführt werden:
c) Ansteuern der jeweiligen Signalisierungskomponente über eine jeweils zugeordnete Inbetriebnahmeadresse zur Abgabe einer optischen Signalisierung;
d) Erfassen der Signalisierung der jeweiligen Signalisierungskomponente mittels einer Bilderfassungseinrichtung (150) zur Erstellung von Abbildungen der Beleuchtungsumgebung (1), wobei zu einer jeweiligen Abbildung zugeordnete Metadaten erfasst werden, zumindest umfassend Positionsdaten der Bilderfassungseinrichtung bei der Erstellung der jeweiligen Abbildung;
e) Ermitteln der Position der signalisierenden Komponente durch eine Bildverarbeitung auf der Basis der jeweiligen Abbildung der signalisierenden Komponente und der der jeweiligen Abbildung zugeordneten Metadaten der signalisierenden Komponente, und
f) Festlegen und Zuordnen einer positionsbezogenen Betriebsadresse zu der jeweiligen signalisierenden Komponente durch die Steuereinrichtung oder ein die Steuereinrichtung ansteuerndes Datenendgerät,
wobei das Ermitteln der Position der jeweils signalisierenden Komponente gemäß dem jeweiligen Schritt e) durch die Bildverarbeitung auf der Basis der digitalen Repräsentation der Beleuchtungsumgebung (1) und der in Schritt d) erfassten jeweiligen Abbildung der signalisierenden Komponente sowie der der Abbildung zugeordneten Metadaten durchgeführt wird, und wobei die Detailtreue der digitalen Repräsentation der Beleuchtungsumgebung mit jeder erfassten und positionsbestimmten signalisierenden Komponente der Beleuchtungsumgebung dadurch erhöht wird, dass die jeweilige erfasste und positionsbestimmte Komponente der Beleuchtungsumgebung in die digitale Repräsentation der Beleuchtungsumgebung aufgenommen wird.

2. Verfahren nach Anspruch 1, **dadurch gekenn**- **zeichnet,** das s die Bildverarbeitung zum Ermitteln der Position der jeweils signalisierenden Komponente unter Anwendung von maschinellem Lernen durchgeführt wird, insbesondere unter Ausführung einer Bildverarbeitung mit Mustererkennung unter Anwendung eines neuronalen Netzwerkes.

3. Verfahren nach einem der Ansprüche 1 oder 2,
**dadurch gekennzeichnet, dass** die Positionsdaten der Bilderfassungseinrichtung Sensordaten zumindest eines Gyroskops (152) und/oder eines Beschleunigungssensors (154) der Bilderfassungseinrichtung umfassen.

4. Verfahren nach einem der Ansprüche 1 bis 3,
**dadurch gekennzeichnet, dass** durch eine Bildverarbeitung, insbesondere durch eine bildbasierte Mustererkennung, signalisierende Beleuchtungskomponenten in der digitalen Repräsentation der Beleuchtungsumgebung als Objekte einer vorgegebenen Objektklasse "Leuchte" oder "Sensor" erkannt und insbesondere in der digitalen Repräsentation der Beleuchtungsumgebungen markiert werden.

5. Verfahren nach Anspruch 4, **dadurch gekenn**- **zeichnet,** dass Objekte der Objektklasse "Leuchte" oder "Sensor" in der digitalen Repräsentation der Beleuchtungsumgebung mit ihren zugeordneten, durch die Bildverarbeitung ermittelten Positionsdaten gespeichert werden.

6. Verfahren nach einem der Ansprüche 4 bis 5,
**dadurch gekennzeichnet, dass** die Mustererkennung in den Abbildungen der Beleuchtungsumgebung die Schritte umfasst:
- Erfassen von Bildmerkmalen in den Abbildungen der Beleuchtungsumgebung (1), und
- Zuordnen der aufgefundenen Bildmerkmale zu jeweiligen Objekten einer vorgegebenen Objektklasse, insbesondere zu Objekten der Objektklasse "Leuchte" und/oder "Sensor" durch Vergleich mit in einem Speicher abgelegten Objektklassen und deren zugeordneten Merkmalen und Durchführung einer Bewertung des Vergleichs.

7. Verfahren nach einem der Ansprüche 1 bis 6,
**dadurch gekennzeichnet, dass** nach der Zuordnung einer jeweiligen positionsbezogenen Betriebsadresse die digitale Repräsentation der Beleuchtungsumgebung (1) des Beleuchtungssystems nach vorgegebenen Kriterien wie die geometrische Anordnung und die Anzahl der Leuchten mit, in einem Speicher abgelegten Beleuchtungsplänen abgeglichen wird, wobei zu einem, nach den vorgegebenen Kriterien nächstliegendem Beleuchtungsplan gespeicherte Betriebsparameter zum Betrieb des Beleuchtungssystems eingestellt werden.

8. Verfahren nach Anspruch 7, **dadurch gekennzeichnet, dass** aus dem, nach den vorgegebenen Kriterien nächstliegenden Beleuchtungsplan, eine Gruppierung von Leuchten (10.1, 10.2) zum Betrieb des Beleuchtungssystems erfasst wird, und den gruppierten Leuchten eine zumindest abschnittsweise identische, insbesondere identische Betriebsadresse zugeordnet wird, über welche diese von der Steuereinrichtung ansteuerbar sind.

9. Verfahren nach Anspruch 7, **dadurch gekenn**- **zeichnet, dass** über eine Eingabevorrichtung eine Gruppierung von mehreren als Leuchten (10.1, 10.2) oder Leuchtquellen ausgebildete Signalisierungskomponenten erfasst wird, und den gruppierten Leuchten oder Leuchtquellen eine zumindest abschnittsweise identische, insbesondere eine identische Betriebsadresse zugeordnet wird, über welche sie von der Steuerungseinrichtung ansteuerbar sind.

10. System zur Positionsbestimmung für eine Mehrzahl von an eine Steuereinrichtung (110) angeschlossene, zur optischen Signalisierung ausgebildete Signalisierungskomponenten eines Beleuchtungssystems in einer Beleuchtungsumgebung (1) und zur Zuordnung einer jeweiligen positionsbezogenen Betriebsadresse zu den Signalisierungskomponenten, umfassend:
- die Steuereinrichtung zur Steuerung der mit dieser verbundenen Signalisierungskomponenten des Beleuchtungssystems, wobei die Signalisierungskomponenten Leuchten (10.1, 10.2) bzw. Leuchtquellen und/oder Sensoren wie Lichtsensoren (20) bzw. Präsenzsensoren (30) umfassen;
- eine Bilderfassungseinrichtung zur Erstellung von Abbildungen der Beleuchtungsumgebung (1), insbesondere eine Kameraeinrichtung (150),
- eine Datenverarbeitungseinrichtung (160), ausgebildet zur Datenverarbeitung, insbesondere zur datentechni- • schen Verarbeitung der erstellten Abbildungen,
wobei die Steuereinrichtung oder ein die Steuereinrichtung ansteuernde Datenendgerät ferner ausgebildet und eingerichtet ist in einem zeitlichen Vorgriff zum nachbeschriebenen Ablauf der Schritte c) - f) zur Durchführung der Schritte:
a) Erfassen einer Mehrzahl von Abbildungen der Beleuchtungsumgebung (1) unter zumindest mehreren unterschiedlichen Perspektiven mit der jeweiligen Abbildung zugeordneten Metadaten, zumindest umfassend Positionsdaten der Bilderfassungseinrichtung bei der Erstellung der jeweiligen Abbildung, wobei alle Signalisierungskomponenten des Beleuchtungssystems bei der Erfassen der Mehrzahl von Abbildungen in einem vorgegebenen Signalisierungszustand gesteuert sind, und
b) Erstellen einer digitalen Repräsentation der Beleuchtungsumgebung (1) umfassend die Raumgeometrie bzw. die räumliche Gestaltung der Beleuchtungsumgebung durch datentechnische Verarbeitung der erfassten Abbildungen und der zugeordneten Metadaten,
wobei die Steuereinrichtung ausgebildet ist,
eine sequentielle Durchführung der folgenden Schritte für jede Signalisierungskomponente aus der Mehrzahl der Signalisierungskomponenten des Beleuchtungssystems zu steuern:
c) Ansteuern der jeweiligen Signalisierungskomponente über eine jeweils zugeordnete Inbetriebnahmeadresse zur Abgabe einer optischen Signalisierung;
d) Erfassen der Signalisierung der jeweiligen Signalisierungskomponente mittels der Bilderfassungseinrichtung (150) durch Erstellung zumindest einer digitalen Abbildung der Beleuchtungsumgebung, wobei zu einer jeweiligen Abbildung zugeordnete Metadaten, zumindest umfassend Positionsdaten der Bilderfassungseinrichtung bei der Erstellung der jeweiligen Abbildung erfasst werden;
e) Ermitteln der Position der signalisierenden Komponente durch Durchführung einer Bildverarbeitung in der Datenverarbeitungseinrichtung (160) auf der Grundlage der jeweiligen Abbildung der signalisierenden Komponente und der der jeweiligen Abbildung zugeordneten Metadaten, und
f) Festlegen und Zuordnen einer positionsbezogenen Betriebsadresse zu der jeweiligen signalisierenden Komponente durch die Steuereinrichtung oder ein die Steuereinrichtung ansteuerndes Datenendgerät,
wobei das Ermitteln der Position der jeweils signalisierenden Komponente durch die Bildverarbeitung auf der Basis der digitalen Repräsentation der Beleuchtungsumgebung (1) und der gemäß d) erfassten jeweiligen Abbildung der signalisierenden Komponenten sowie der der Abbildung zugeordneten Metadaten durchgeführt ist, und wobei die Steuereinrichtung oder das die Steuereinrichtung ansteuernde Datenendgerät ausgebildet und eingerichtet ist, die Detailtreue der digitalen Repräsentation der Beleuchtungsumgebung mit jeder erfassten und positionsbestimmten signalisierenden Komponente der Beleuchtungsumgebung zu erhöhen durch das Aufnehmen der jeweiligen erfassten und positionsbestimmten Komponente der Beleuchtungsumgebung in die digitale Repräsentation der Beleuchtungsumgebung.

11. System nach Anspruch 10, **gekennzeichnet durch**
- eine der Bilderfassungseinrichtung zur Erstellung von den Abbildungen der Beleuchtungsumgebung (1) zugeordnete Positions- und Ausrichtungserfassungseinrichtung (152), die ausgebildet ist zum Erfassen von, einer jeweiligen Abbildung der Beleuchtungsumgebung (1) zugeordneten Metadaten wie Positionsinformation, Information bezüglich der Ausrichtung der Bilderfassungseinrichtung im Raum und/oder Information bezüglich Betriebseinstellungen der Bilderfassungseinrichtung.

12. System nach Anspruch 10 oder 11, **dadurch ge** - **kennzeichnet, dass** das System einen Speicher aufweist zur Speicherung der ermittelten digitalen Repräsentation der Beleuchtungsumgebung.

13. System nach einem der Ansprüche 10 bis 12, **gekenn- zeichnet durch**
eine mit der Steuereinrichtung (110) verbindbare Eingabeeinrichtung (190) zur manuellen Eingabe, insbesondere zur Gruppierung von Leuchten (10.1, 10.2) des Beleuchtungssystems (1) und/oder zum Starten bzw. Steuern eines Verfahrens zur Positionsbestimmung für eine Mehrzahl von an die Steuereinrichtung angeschlossenen, zur optischen Signalisierung ausgebildeten Komponenten eines Beleuchtungssystems in einer Beleuchtungsumgebung und zur Zuordnung einer jeweiligen positionsbezogenen Betriebsadresse zu den Signalisierungskomponenten.

14. System nach einem der Ansprüche 10 bis 13, **dadurch gekennzeichnet, dass** das Datenendgerät (100) die Bilderfassungseinrichtung (150) sowie die der Bilderfassungseinrichtung zugeordnete Positionserfassungs- und Ausrichtungserfassungseinrichtung (152), die Datenverarbeitungseinrichtung (160) und die Eingabeeinrichtung (190) sowie eine Anzeigeeinrichtung, insbesondere zur Anzeige von aus dem digitalen Abbild der Beleuchtungsumgebung (1) erstellten Ansichten der Beleuchtungsumgebung, aufweist.

## Claims

1. Method for determining the position for a plurality of components of a lighting system, in particular luminaires (10.1, 10.2), light sources and/or sensors (20, 30), connected to a control device and designed for optical signaling, in a lighting environment (1) and assignment of a respective position-related operating address to the signaling components,
the method comprising in a temporal anticipation of the sequence described below of the steps c) to f):
a) capturing a plurality of images of the lighting environment (1) from at least several different perspectives, wherein all signaling components of the lighting system are controlled in a predetermined signaling state during the capture of the plurality of images and wherein metadata associated with a respective image, at least comprising position data of the image capture device, are captured, and
b) creating a digital representation of the lighting environment (1) comprising the spatial geometry or the spatial design of the lighting environment by data processing of the captured images and the associated metadata, and subsequently performing steps c) - f), which are carried out sequentially for each signaling component from the plurality of signaling components:
c) controlling the respective signaling component via a respective assigned start-up address to emit an optical signaling;
d) capturing the signaling of the respective signaling component by means of an image capture device (150) for creating images of the lighting environment (1), wherein metadata associated with a respective image are captured, the metadata at least comprising position data of the image capture device during the creation of the respective image;
e) determining the position of the signaling component by image processing based on the respective image of the signaling component and the metadata of the signaling component associated with the respective image; and
f) determining and assigning a position-related operating address to the respective signaling component by the control device or a data terminal controlling the control device,
wherein the determination of the position of the respective signaling component according to the respective step e) is performed by the image processing on the basis of the digital representation of the lighting environment (1) and the respective image of the signaling component captured in step d) and the metadata associated with the image, and wherein the level of detail of the digital representation of the lighting environment with each captured and position-determined signaling component of the lighting environment is increased by including the respective captured and position-determined component of the lighting environment in the digital representation of the lighting environment.

2. Method according to claim 1, **characterized in that** the image processing for determining the position of the respective signaling component is carried out using machine learning, in particular using image processing with pattern recognition using a neural network.

3. Method according to any one of claims 1 or 2, **characterized in that** the position data of the image capture device comprise sensor data from at least a gyroscope (152) and/or an acceleration sensor (154) of the image capture device.

4. Method according to any one of claims 1 to 3, **characterized in that** signaling lighting components in the digital representation of the lighting environment are recognized and in particular marked in the digital representation of the lighting environments as objects of a predetermined object class "luminaire" or "sensor" by image processing, in particular by image-based pattern recognition.

5. Method according to claim 4, **characterized in that** objects of the object class "luminaire" or "sensor" are stored in the digital representation of the lighting environment with their associated position data determined by the image processing.

6. Method according to any one of claims 4 to 5, **characterized in that** the pattern recognition in the images of the lighting environment comprises the steps:
- detecting image features in the images of the lighting environment (1), and
- assigning the discovered image features to respective objects of a predefined object class, in particular to objects of the object class "luminaire" and/or "sensor" by comparison with object classes stored in a memory and their assigned features, and carrying out an evaluation of the comparison.

7. Method according to any one of claims 1 to 6,
**characterized in that**, after the assignment of a respective position-related operating address, the digital representation of the lighting environment (1) of the lighting system is compared with lighting plans stored in a memory according to predefined criteria such as the geometric arrangement and the number of luminaires, stored operating parameters for operating the lighting system being set for a lighting plan which is closest to the predefined criteria.

8. Method according to claim 7, **characterized in that** a grouping of luminaires (10.1, 10.2) for operating the lighting system is determined from the lighting plan which is closest according to the predefined criteria, and the grouped luminaires are assigned an operating address which is identical at least in sections, in particular an identical operating address, via which they can be controlled by the control device.

9. Method according to claim 7, **characterized in that** a grouping of a plurality of signaling components designed as luminaires (10.1, 10.2) or light sources is determined via an input device and the grouped luminaires or light sources are assigned an operating address which is identical at least in sections, in particular an identical operating address, via which they can be controlled by the control device.

10. System for determining the position of a plurality of signaling components of a lighting system in a lighting environment (1) which are connected to a control device (110) and are designed for optical signaling, and for assigning a respective position-related operating address to the signaling components, comprising:
- the control device for controlling the signaling components of the lighting system connected thereto, wherein the signaling components comprise luminaires (10.1, 10.2) or light sources and/or sensors such as light sensors (20) or presence sensors (30);
- an image capture device for creating images of the lighting environment (1), in particular a camera device (150),
- a data processing device (160) designed for data processing, in particular for data processing of the images created,
wherein the control device or a data terminal controlling the control device is furthermore designed and set up in a temporal anticipation of the sequence of steps c) - f) described below for carrying out the following steps:
a) capturing a plurality of images of the lighting environment (1) from at least a plurality of different perspectives with metadata associated with the respective image, the meta data at least comprising position data of the image capture device when the respective image is created, all signaling components of the lighting system being controlled in a predetermined signaling state when the plurality of images are captured, and
b) creating a digital representation of the lighting environment (1) comprising the spatial geometry or the spatial design of the lighting environment by data processing of the captured images and the associated metadata,
wherein the control device is designed to sequentially perform the following steps for each signaling component from the plurality of signaling component of the lighting system:
c) controlling the respective signaling component via a respectively assigned start-up address to emit optical signaling;
d) capturing the signaling of the respective signaling component by means of the image capture device (150) by creating at least one digital image of the lighting environment, wherein metadata associated with a respective image and at least comprising position data of the image capture device are captured during the creation of the respective image;
e) determining the position of the signaling component by performing image processing in the data processing device (160) on the basis of the respective image of the signaling component and the metadata associated with the respective image; and
f) determining and assigning a position-related operating address to the respective signaling component by the control device or a data terminal controlling the control device,
wherein the determination of the position of the respective signaling component is carried out by the image processing on the basis of the digital representation of the lighting environment (1) and the respective image of the signaling component captured according to d) as well as the metadata associated with the image, and wherein the control device or the data terminal controlling the control device is designed and set up for increasing the level of detail of the digital representation of the lighting environment with each captured and position-determined signaling component of the lighting environment by including the respective captured and position-determined component of the lighting environment in the digital representation of the lighting environment.

11. System according to claim 10, **characterized by**
- a position and orientation detection device (152) associated with the image capture device for creating images of the lighting environment (1), the position and orientation detection device being adapted to capture metadata of a respective image of the lighting environment (1), such as position information, information relating to the orientation of the image capture device in space and/or information relating to operational settings of the image capturing device.

12. System according to claim 10 or 11, **characterized in that** the system comprises a memory for storing the determined digital representation of the lighting environment.

13. System according to any one of claims 10 to 12,
**characterized by**
an input device (190) connectable to the control device (110) for manual input, in particular for grouping luminaires (10.1, 10.2) of the lighting system (1) and/or for starting or controlling a method for determining the position for a plurality of components of a lighting system connected to the control device and designed for optical signaling in a lighting environment and for assigning a respective position-related operating address to the signaling components.

14. System according to any one of claims 10 to 13,
**characterized in that** the data terminal (100) has the image capture device (150) and the position detection and orientation detection device (152) associated with the image capture device, the data processing device (160) and the input device (190) and the display device, in particular for displaying views of the lighting environment created from the digital image of the lighting environment (1).

## Revendications

1. Procédé de détermination de la position d'une pluralité de composants d'un système d'éclairage, en particulier de luminaires (10.1, 10.2), de sources lumineuses et/ou de capteurs (20, 30), raccordés à un dispositif de commande et conçus pour la signalisation optique, dans un environnement d'éclairage (1) et association d'une adresse de fonctionnement respective, relative à la position, aux composants de signalisation,
le procédé comprenant, en anticipation temporelle du déroulement des étapes c) à f) décrites ci-après:
a) capturer une pluralité d'images de l'environnement d'éclairage (1) sous au moins plusieurs perspectives différentes, tous les composants de signalisation du système d'éclairage étant commandés dans un état de signalisation prédéfini lors de la capture de la pluralité d'images et des métadonnées associées à une image respective comprenant au moins des données de position du dispositif de capture d'image étant capturées et
b) création d'une représentation numérique de l'environnement d'éclairage (1) comprenant la géométrie spatiale ou la configuration spatiale de l'environnement d'éclairage par traitement des données des images capturées et des métadonnées associées, et ensuite les étapes c) à f), qui sont exécutées de manière séquentielle pour chaque composante de signalisation parmi la pluralité de composantes de signalisation:
c) commande du composant de signalisation respectif par l'intermédiaire d'une adresse de mise en fonctionnement respective associée pour l'émission d'une signalisation optique;
d) capture de la signalisation du composant de signalisation respectif au moyen d'un dispositif de capture d'images (150) pour la création de représentations de l'environnement d'éclairage (1), des métadonnées associées à une représentation respective étant recueillies, comprenant au moins des données de position du dispositif de capture d'images lors de la création de la représentation respective;
e) détermination de la position du composant de signalisation par un traitement d'image sur la base de l'image respective du composant de signalisation et des métadonnées du composant de signalisation associées à l'image respective, et
f) définition et association d'une adresse de fonctionnement relative à la position au composant de signalisation respectif par le dispositif de commande ou un terminal de données commandant le dispositif de commande,
la détermination de la position du composant de signalisation respectif selon l'étape e) respective étant effectuée par le traitement d'image sur la base de la représentation numérique de l'environnement d'éclairage (1) et de l'image respective du composant de signalisation capturée à l'étape d) ainsi que des métadonnées associées à l'image, et la fidélité aux détails de la représentation numérique de l'environnement d'éclairage étant augmentée avec chaque composant de signalisation de l'environnement d'éclairage capturé et déterminé en position par le fait que le composant respectif de l'environnement d'éclairage capturé et déterminé en position est intégré dans la représentation numérique de l'environnement d'éclairage.

2. Procédé selon la revendication 1, **caractérisé en ce que** le traitement d'image pour déterminer la position de chaque composant signalant est réalisé en utilisant un apprentissage automatique, notamment en réalisant un traitement d'image avec reconnaissance de formes en utilisant un réseau neuronal.

3. Procédé selon l'une quelconque des revendications 1 ou 2, **caractérisé en ce que** les données de position du dispositif de capture d'images comprennent des données de capteur d'au moins un gyroscope (152) et/ou un capteur d'accélération (154) du dispositif de capture d'images.

4. Procédé selon l'une des revendications 1 à 3, **caractérisé en ce que** des composants d'éclairage signalants sont reconnus dans la représentation numérique de l'environnement d'éclairage comme des objets d'une classe d'objets prédéfinie "luminaire" ou "capteur" et sont en particulier marqués dans la représentation numérique des environnements d'éclairage par un traitement d'image, en particulier par une reconnaissance de modèle basée sur l'image.

5. Procédé selon la revendication 4, **caractérisé en ce que** des objets de la classe d'objets "luminaire" ou "capteur" sont enregistrés dans la représentation numérique de l'environnement d'éclairage avec leurs données de position associées, déterminées par le traitement d'image.

6. Procédé selon l'une quelconque des revendications 4 à 5, **caractérisé en ce que** la reconnaissance de formes dans
les représentations de l'environnement d'éclairage comprend les étapes suivantes:
- détection de caractéristiques d'image dans les images de l'environnement d'éclairage (1), et
- association des caractéristiques d'image trouvées à des objets respectifs d'une classe d'objets prédéfinie, en particulier à des objets de la classe d'objets "luminaire" et/ou "capteur" par comparaison avec des classes d'objets enregistrées dans une mémoire et leurs caractéristiques attribuées et réalisation d'une évaluation de la comparaison.

7. Procédé selon l'une quelconque des revendications 1 à 6, **caractérisé en ce qu'**après l'association d'une adresse de fonctionnement respective liée à la position, la représentation numérique de l'environnement d'éclairage (1) du système d'éclairage est comparée, selon des critères prédéfinis tels que la disposition géométrique et le nombre de luminaires, à des plans d'éclairage enregistrés dans une mémoire, dans lequel, d'une part, des paramètres de fonctionnement mémorisés du plan d'éclairage le plus proche selon les critères prédéfinis sont réglés pour le fonctionnement du système d'éclairage.

8. Procédé selon la revendication 7, **caractérisé en ce que**, à partir du plan d'éclairage le plus proche selon les critères prédéfinis, on saisit un groupement de luminaires (10.1, 10.2) pour le fonctionnement du système d'éclairage et on associe aux luminaires groupés une adresse de fonctionnement au moins partiellement identique, en particulier identique, par laquelle ceux-ci peuvent être commandés par le dispositif de commande.

9. Procédé selon la revendication 7, **caractérisé en ce qu'**un groupement de plusieurs composants de signalisation conçus comme des luminaires (10.1, 10.2) ou des sources lumineuses est saisi par l'intermédiaire d'un dispositif d'entrée et **en ce qu'**une adresse de fonctionnement au moins partiellement identique, en particulier identique, est associé aux luminaires ou aux sources lumineuses regroupés, adresse par l'intermédiaire de laquelle ils peuvent être commandés par le dispositif de commande.

10. Système de détermination de la position pour une pluralité de composants de signalisation d'un système d'éclairage raccordés à un dispositif de commande (110) et conçus pour la signalisation optique dans un environnement d'éclairage (1) et pour l'association d'une adresse de fonctionnement respective liée à la position aux composants de signalisation, comprenant:
- le dispositif de commande pour commander les composants de signalisation du système d'éclairage reliés à celui-ci, les composants de signalisation comprenant des luminaires (10.1, 10.2) ou des sources lumineuses et/ou des capteurs tels que des capteurs de lumière (20) ou des capteurs de présence (30);
- un dispositif de capture d'images pour créer des images de l'environnement d'éclairage (1), en particulier un dispositif de caméra (150),
- un dispositif de traitement de données (160), conçu pour le traitement de données, en particulier pour le traitement informatique des images créées,
le dispositif de commande ou un terminal de données commandant le dispositif de commande étant en outre conçu et agencé, en anticipation temporelle du déroulement décrit ci-après des étapes c) à f), pour exécuter les étapes suivantes:
a) capture d'une pluralité d'images de l'environnement d'éclairage (1) sous au moins plusieurs perspectives différentes avec des métadonnées associées à l'image respective, comprenant au moins des données de position du dispositif de capture d'image lors de la création de l'image respective, tous les composants de signalisation du système d'éclairage étant commandés dans un état de signalisation prédéfini lors de la capture de la pluralité d'images, et
b) création d'une représentation numérique de l'environnement d'éclairage (1) comprenant la géométrie spatiale ou la configuration spatiale de l'environnement d'éclairage par traitement des données des images capturées et des métadonnées associées,
le dispositif de commande étant conçu pour effectuer une exécution séquentielle des étapes suivantes pour chaque composant de signalisation parmi la pluralité de composants de signalisation:
c) commande du composant de signalisation respectif par l'intermédiaire d'une adresse de mise en fonctionnement respectivement affectée pour l'émission d'une signalisation optique;
d) capture de la signalisation du composant de signalisation respectif au moyen du dispositif de capture d'image (150) par création d'au moins une représentation numérique de l'environnement d'éclairage, des métadonnées associées à une représentation respective, comprenant au moins des données de position du dispositif de capture d'image, étant capturées lors de la création de la représentation respective;
e) déterminer la position du composant de signalisation en effectuant un traitement d'image dans le dispositif de traitement de données (160) sur la base de l'image respective du composant de signalisation et des métadonnées associées à l'image respective, et
f) définir et associer une adresse de fonctionnement relative à la position au composant de signalisation respectif par le dispositif de commande ou un terminal de données commandant le dispositif de commande,
la détermination de la position du composant de signalisation respectif étant effectuée par le traitement d'image sur la base de la représentation numérique de l'environnement d'éclairage (1) et de l'image respective du composant de signalisation capturée selon d) ainsi que des métadonnées associées à l'image, et le dispositif de commande ou le terminal de données commandant le dispositif de commande étant conçu et configuré pour augmenter la fidélité des détails de la représentation numérique de l'environnement d'éclairage avec chaque composant de signalisation de l'environnement d'éclairage capturé et déterminé en position par l'enregistrement du composant respectif capturé et déterminé en position de l'environnement d'éclairage dans la représentation numérique de l'environnement d'éclairage.

11. Système selon la revendication 10, **caractérisé par**
- un dispositif de détection de position et d'orientation (152) associé au dispositif de capture d'images pour la création des représentations de l'environnement d'éclairage (1) qui est conçu pour acquérir des métadonnées d'une représentation respective de l'environnement d'éclairage (1), telles que des informations de position, des informations concernant l'orientation du dispositif de capture d'images dans l'espace et/ou des informations concernant des réglages de fonctionnement du dispositif de capture d'images.

12. Système selon la revendication 10 ou 11, **caractérisé en ce que** le système comprend une mémoire pour stocker la représentation numérique déterminée de l'environnement d'éclairage.

13. Système selon l'une quelconque des revendications 10 à 12, **caractérisé par**
un dispositif d'entrée (190) pouvant être relié au dispositif de commande (110) pour la capture manuelle, en particulier pour le groupement de luminaires (10.1, 10.2) du système d'éclairage (1) et/ou pour le démarrage ou la commande d'un procédé de détermination de position pour une pluralité de composants d'un système d'éclairage raccordés au dispositif de commande et conçus pour la signalisation optique dans un environnement d'éclairage et pour l'association d'une adresse de fonctionnement respective relative à la position aux composants de signalisation.

14. Système selon l'une quelconque des revendications 10 à 13, **caractérisé en ce que** le terminal de données (100) comporte le dispositif de capture d'image (150) ainsi que le dispositif de détection de position et d'orientation (152) associé au dispositif de capture d'image, le dispositif de traitement de données (160) et le dispositif d'entrée (190) ainsi que le dispositif d'affichage, en particulier pour l'affichage de vues de l'environnement d'éclairage créées à partir de l'image numérique de l'environnement d'éclairage (1).
